# EUROPEAN PATENT APPLICATION

(11) **EP 3 816 420 A2**
(43) Date of publication of application: **05.05.2021**
(21) Application number: 20191791.1
(22) Date of filing: 19.08.2020
(51) Int. Cl.: F02D 41/14, G01M 15/11, G07C 5/08, G06N 3/08

(54) **VEHICLE LEARNING CONTROL SYSTEM, VEHICLE CONTROL DEVICE, AND VEHICLE LEARNING DEVICE**

(30) Priority: 22.08.2019 JP 2019152133
(71) Applicant: TOYOTA JIDOSHA KABUSHIKI KAISHA, TOYOTA-SHI, AICHI-KEN 471-8571 (JP)
(72) Inventor: HASHIMOTO, Yohsuke, Aichi-ken, 471-8571 (JP); KATAYAMA, Akihiro, Aichi-ken, 471-8571 (JP); OSHIRO, Yuta, Aichi-ken, 471-8571 (JP); SUGIE, Kazuki, Aichi-ken, 471-8571 (JP); OKA, Naoya, Aichi-ken, 471-8571 (JP)
(74) Representative: D Young & Co LLP

(57) **Abstract**

A storage device (76) in a vehicle stores practical mapping data (76a) and evaluation mapping data (76b), and a CPU (72) determines a presence or absence of a misfire based on a mapping defined by each of the mapping data. When there is a mismatch between two determination results, the CPU (72) transmits, to a data analysis center (100), data used as an input of the mapping defined by the evaluation mapping data (76b). The data analysis center (100) verifies a validity of the determination result using the evaluation mapping data (76b).

## Description

### BACKGROUND OF THE INVENTION

### 1. Field of the Invention

The invention relates to a vehicle learning control system using machine learning, a vehicle control device, and a vehicle learning device.

### 2. Description of Related Art

For example, Japanese Unexamined Patent Application Publication No. 4-91348 (JP 4-91348 A) suggests a device including a neural network that outputs a value indicating whether or not a misfire has occurred in each of a plurality of cylinders of an internal combustion engine by inputting a rotation fluctuation amount as an amount of change in rotation speed.

### SUMMARY OF THE INVENTION

In general, in order to enhance the reliability of a learned model learned by machine learning, it is needed to perform learning using training data in various situations. However, before the device is mounted on a vehicle, sufficient training data may not necessarily be obtained in various situations that may occur when the device is actually mounted on the vehicle. When sufficient training data cannot be obtained, it is difficult to verify whether or not the neural network outputs a correct value in various situations when the neural network is mounted on the vehicle.
1. A first aspect of the invention relates to a vehicle control device including an execution device and a storage device. The storage device is configured to store first mapping data defining a first mapping that outputs a first output value related to a default state of a vehicle by inputting first input data based on a detection value of an in-vehicle sensor, and second mapping data defining a second mapping that outputs a second output value related to the default state by inputting second input data based on the detection value of the in-vehicle sensor and including data learned by machine learning. The execution device is configured to execute a first acquisition process of acquiring the first input data, a first calculation process of calculating the first output value by inputting the first input data to the first mapping, a coping process of operating predetermined hardware to cope with a calculation result of the first calculation process based on the calculation result, a second acquisition process of acquiring the second input data, a second calculation process of calculating the second output value by inputting the second input data to the second mapping, and a determination process of determining whether or not the first output value and the second output value are consistent with each other.
   According to this configuration, the first mapping is used in performing some control in the vehicle. Since the presence or absence of a consistency between the second output value and the first output value is determined by the determination process, when determination is made that there is no consistency, it is possible to detect that the reliability of the second mapping may be low. Then, since it is possible to detect that the reliability may be low, it is possible to verify the reliability of the second mapping in the detected situation.
2. In the vehicle control device according to the first aspect, the execution device may be configured to, when determination is made in the determination process that there is no consistency, execute a relearning data generation process of generating data for updating the second mapping data based on the second input data used when the determination is made that there is no consistency.
   According to this configuration, by executing the relearning data generation process, since it is possible to provide data for updating the second mapping data based on the input data of the second mapping used when determination is made that there is no consistency, the second mapping data can be relearned.
3. In the vehicle control device according to the above item 2, the execution device may be configured to execute a relearning process of relearning the second mapping data based on the data generated by the relearning data generation process.
   According to this configuration, the first mapping is used in performing some control in the vehicle. Since the presence or absence of a consistency between the second output value and the first output value is determined by the determination process, when determination is made that there is no consistency, it is possible to detect that the reliability of the second mapping may be low. Then, since the second mapping data can be relearned based on the input data of the second mapping used when the determination is made that there is no consistency, it is possible to output the second mapping with high accuracy in various situations of the vehicle.
4. A second aspect of the invention relates to a vehicle learning control system including the execution device and the storage device according to the above item 3. In the second aspect, the relearning data generation process may include a display process of displaying information regarding the second input data on a display device, a validity determination result import process of importing information on whether or not an output value of the second mapping has an error, and a process of generating data for updating the second mapping data based on the information imported by the validity determination result import process.
   According to the second aspect, by displaying, on the display device, the information regarding the second input data used when determination is made that the first output value and the second output value are not consistent with each other, it is possible to verify the validity of the output of the second mapping by using a subject that can determine the state of the vehicle from the information regarding the second input data or the like, in addition to the first mapping and the second mapping. Then, by importing the determination result using the same subject by the validity determination result import process, it is possible to determine whether the input data to be displayed may be used as relearning data for updating the second mapping data.
5. A third aspect of the invention relates to a vehicle learning control system including the execution device and the storage device according to the above item 3. The storage device may be configured to store third mapping data defining a third mapping that outputs a third output value related to the default state by inputting data based on the detection value of the in-vehicle sensor. The relearning data generation process may include a third calculation process of calculating the third output value by inputting the data based on the detection value of the in-vehicle sensor to the third mapping, and a process of generating data for updating the second mapping data based on a presence or absence of a consistency between the third output value and the second output value.
   According to the third aspect, when determination is made that the output of the first mapping and the output of the second mapping are not consistent with each other, it is possible to verify the validity of the second mapping by determining the presence or absence of the consistency between the output of the third mapping and the output of the second mapping.
6. The execution device according to the above item 4 or 5 may include the first execution device mounted on the vehicle and a second execution device separate from an in-vehicle device. The relearning data generation process may include an input data transmission process of transmitting data related to the second input data used when the determination is made that there is no consistency, and an input data reception process of receiving the data transmitted by the input data transmission process. The first execution device may be configured to execute the first acquisition process, the first calculation process, the second acquisition process, the second calculation process, the coping process, the determination process, and the input data transmission process. The second execution device may be configured to execute the processes other than the input data transmission process in the relearning data generation process, and the relearning process. A fourth aspect of the invention relates to a vehicle control device including the first execution device.
   According to the fourth aspect, it is possible to execute the relearning process by a device other than the in-vehicle device. The description that the second execution device is a device "separate from an in-vehicle device" means that the second execution device is not an in-vehicle device.
7. In the vehicle control device according to the fourth aspect, the second execution device may be configured to execute a parameter transmission process of transmitting a relearned parameter learned by the relearning process to the vehicle, and the first execution device may be configured to execute a parameter reception process of receiving the parameter transmitted by the parameter transmission process.
   According to his configuration, when the vehicle control device receives the relearned parameter, it is possible to update the second mapping data by using the relearned parameter received by the vehicle control device.
8. In the vehicle control device according to the above item 6 or 7, the first execution device may be configured to execute the input data transmission process when travel of the vehicle ends.
   According to this configuration, by executing the relearning data transmission process when travel of the vehicle ends, it is possible to reduce the calculation load of the vehicle control device during the travel of the vehicle as compared with the case where the input data transmission process is executed during the travel of the vehicle.
9. A fifth aspect of the invention relates to a vehicle learning device including the second execution device according to the above items to 6 to 8.
10. The execution device according to the item 4 or 5 may include a first execution device mounted on the vehicle and the second execution device separate from an in-vehicle device. The storage device may include a first storage device mounted on the vehicle and the second storage device separate from an in-vehicle device. The first mapping data may include practical mapping data and comparison mapping data. The first storage device may be configured to store the practical mapping data. The second storage device may be configured to store the comparison mapping data and the second mapping data. The first acquisition process may include a practical acquisition process of acquiring data to be input to a mapping defined by the practical mapping data, and a comparison acquisition process of acquiring data to be input to a mapping defined by the comparison mapping data. The first execution device may be configured to execute the first acquisition process, the second acquisition process, the first calculation process based on the practical mapping data, an input data transmission process of transmitting the data acquired by the comparison acquisition process and the second input data acquired by the second acquisition process to an outside of the vehicle, and the coping process. The second execution device may be configured to execute an input data reception process of receiving the data transmitted by the input data transmission process, the first calculation process based on the comparison mapping data, the second calculation process, the determination process, the relearning data generation process, and the relearning process. A sixth aspect of the invention relates to a vehicle learning device including the second execution device and the second storage device.
   According to the sixth aspect, it is possible to reduce the calculation load on the vehicle by executing the second calculation process and the determination process outside the vehicle. The description that the second execution device or the second storage device is a device "separate from an in-vehicle device" means that the second execution device or the second storage device is not an in-vehicle device.
11. The execution device according to the above item 4 or 5 may include the first execution device mounted on the vehicle and a second execution device separate from an in-vehicle device. The storage device may include the first storage device mounted on the vehicle and configured to store the first mapping data, and a second storage device separate from an in-vehicle device and configured to store the second mapping data. The first execution device may be configured to execute the first acquisition process, the second acquisition process, an input data transmission process of transmitting the second input data acquired by the second acquisition process to an outside of the vehicle, the first calculation process, a first calculation result transmission process of transmitting a calculation result of the first calculation process, and the coping process. The second execution device may be configured to execute an input data reception process of receiving the second input data transmitted by the input data transmission process, a first calculation result reception process of receiving the calculation result transmitted by the first calculation result transmission process, the second calculation process, the determination process, the relearning data generation process, and the relearning process. A seventh aspect of the invention relates to a vehicle control device including the first execution device and the first storage device.
   According to the seventh aspect, it is possible to reduce the calculation load on the vehicle by executing the second calculation process and the determination process outside the vehicle. The description that the second execution device or the second storage device is a device "separate from an in-vehicle device" means that the second execution device or the second storage device is not an in-vehicle device.
12. The execution device according to the above item 4 or 5 may include the first execution device mounted on the vehicle and a second execution device separate from an in-vehicle device. The storage device may include the first storage device mounted on the vehicle and configured to store the first mapping data, and a second storage device separate from an in-vehicle device and configured to store the second mapping data. The first execution device may be configured to execute the first acquisition process, the second acquisition process, an input data transmission process of transmitting the second input data acquired by the second acquisition process to an outside of the vehicle, the first calculation process, a second calculation result reception process of receiving a calculation result of the second calculation process, the coping process, the determination process, and a result transmission process of transmitting data related to a determination result by the determination process. The second execution device may be configured to execute an input data reception process of receiving the data transmitted by the input data transmission process, the second calculation process, a second calculation result transmission process of transmitting the calculation result of the second calculation process, a result reception process of receiving the data transmitted by the result transmission process, the relearning data generation process, and the relearning process. An eighth aspect of the invention relates to a vehicle control device including the first execution device and the first storage device.
   According to the eighth aspect, it is possible to reduce the calculation load on the vehicle by executing the second calculation process and the determination process outside the vehicle. The description that the second execution device or the second storage device is a device "separate from an in-vehicle device" means that the second execution device or the second storage device is not an in-vehicle device.
13. A ninth aspect of the invention relates to a vehicle learning device including the second execution device and the second storage device according to the seventh or eighth aspect.
14. The execution device according to the above item 4 or 5 may include the first execution device mounted on the vehicle and a second execution device separate from an in-vehicle device. The first execution device may be configured to execute the first acquisition process, the second acquisition process, an input data transmission process of transmitting the first input data acquired by the first acquisition process and the second input data acquired by the second acquisition process to an outside of the vehicle, a result reception process of receiving a calculation result of the first calculation process, and the coping process. The second execution device may be configured to execute an input data reception process of receiving the data transmitted by the input data transmission process, the first calculation process, a first calculation result transmission process of transmitting the calculation result of the first calculation process, the second calculation process, the determination process, the relearning data generation process, and the relearning process. A tenth aspect of the invention relates to a vehicle control device including the first execution device.
   According to the tenth aspect, it is possible to reduce the calculation load on the vehicle by executing the first calculation process, the second calculation process, and the determination process outside the vehicle. The description that the second execution device or the second storage device is a device "separate from an in-vehicle device" means that the second execution device or the second storage device is not an in-vehicle device.
15. An eleventh aspect of the invention relates to a vehicle learning device including the second execution device and the storage device according to the tenth aspect.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a configuration of a vehicle learning control system according to a first embodiment;
FIG. 2 is a flowchart illustrating a procedure of a process executed by a control device according to the first embodiment;
FIG. 3 is a flowchart illustrating a procedure of a process executed by the control device according to the first embodiment;
FIG. 4A is a flowchart illustrating a procedure of a process executed by the system according to the first embodiment;
FIG. 4B is a flowchart illustrating a procedure of a process executed by the system according to the first embodiment;
FIG. 5 is a diagram illustrating transmission data according to the first embodiment;
FIG. 6 is a diagram illustrating a configuration of a vehicle learning control system according to a second embodiment;
FIG. 7 is a flowchart illustrating a procedure of a process executed by a control device according to the second embodiment;
FIG. 8 is a flowchart illustrating a procedure of a process executed by the control device according to the second embodiment;
FIG. 9A is a flowchart illustrating a procedure of a process executed by the system according to the second embodiment;
FIG. 9B is a flowchart illustrating a procedure of a process executed by the system according to the second embodiment;
FIG. 10 is a diagram illustrating a configuration of a vehicle learning control system according to a third embodiment;
FIG. 11A is a flowchart illustrating a procedure of a process executed by the system according to the third embodiment;
FIG. 11B is a flowchart illustrating a procedure of a process executed by the system according to the third embodiment;
FIG. 12 is a diagram illustrating a configuration of a vehicle learning control system according to a fourth embodiment;
FIG. 13A is a flowchart illustrating a procedure of a process executed by the system according to the fourth embodiment;
FIG. 13B is a flowchart illustrating a procedure of a process executed by the system according to the fourth embodiment;
FIG. 14A is a flowchart illustrating a procedure of a process executed by a system according to a fifth embodiment;
FIG. 14B is a flowchart illustrating a procedure of a process executed by the system according to the fifth embodiment;
FIG. 15 is a diagram illustrating a configuration of a vehicle learning control system according to a sixth embodiment;
FIG. 16A is a flowchart illustrating a procedure of a process executed by the system according to the sixth embodiment;
FIG. 16B is a flowchart illustrating a procedure of a process executed by the system according to the sixth embodiment;
FIG. 17 is a diagram illustrating a configuration of a vehicle control device and a drive system according to a seventh embodiment; and
FIG. 18 is a flowchart illustrating a procedure of a process executed by the vehicle control device according to the seventh embodiment.

### DETAILED DESCRIPTION OF EMBODIMENTS

### First Embodiment

Hereinafter, a first embodiment of a vehicle learning control system will be described with reference to the drawings.

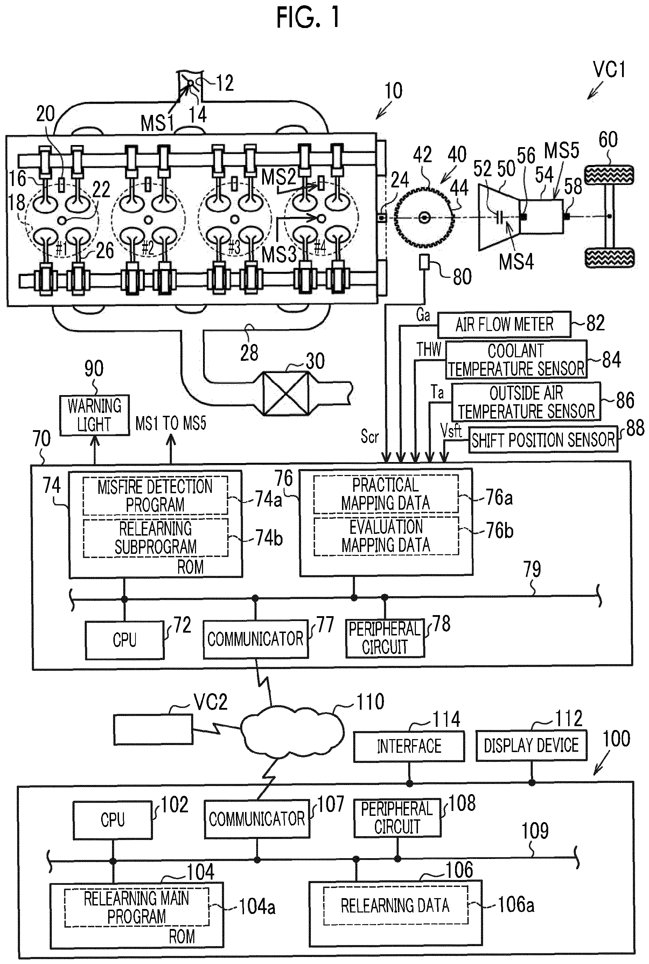

In an internal combustion engine 10 mounted on a vehicle VC1 illustrated in FIG. 1, a throttle valve 14 is provided in an intake passage 12. Air sucked from the intake passage 12 flows into a combustion chamber 18 of each of cylinders #1 to #4 when an intake valve 16 opens. Fuel is injected into the combustion chamber 18 by a fuel injection valve 20. In the combustion chamber 18, an air-fuel mixture of air and fuel is provided for combustion by spark discharge of an ignition device 22, and energy generated by the combustion is converted into rotation energy of a crankshaft 24. The air-fuel mixture provided for the combustion is discharged into an exhaust passage 28 as exhaust gas in accordance with the opening of an exhaust valve 26. The exhaust passage 28 is provided with a catalyst 30 having oxygen storage capacity.

An input shaft 56 of a transmission 54 can be connected to the crankshaft 24 of the internal combustion engine 10 via a torque converter 50. The torque converter 50 includes a lock-up clutch 52, and when the lock-up clutch 52 is engaged, the crankshaft 24 and the input shaft 56 are connected to each other. Drive wheels 60 are mechanically connected to an output shaft 58 of the transmission 54.

A crank rotor 40 provided with a tooth portion 42 indicating each of a plurality of rotation angles of the crankshaft 24 is coupled to the crankshaft 24. In the present embodiment, 34 tooth portions 42 are exemplified. Although the crank rotor 40 is basically provided with the tooth portions 42 at intervals of 10° CA, one toothless portion 44 which is a place where an interval between adjacent tooth portions 42 is 30° CA is provided in the crank rotor 40. The toothless portion is for indicating the reference rotation angle of the crankshaft 24.

A control device 70 controls the internal combustion engine 10 and operates operation units of the internal combustion engine 10 such as the throttle valve 14, the fuel injection valve 20, the ignition device 22, and the like in order to control a torque, an exhaust component ratio, and the like, which are control amounts of the internal combustion engine. The control device 70 controls the torque converter 50 and operates the lock-up clutch 52 in order to control an engagement state of the lock-up clutch 52, which is a control amount of the torque converter. The control device 70 controls the transmission 54, and operates the transmission 54 in order to control a gear ratio, which is a control amount of the transmission 54. FIG. 1 illustrates operation signals MS1 to MS5 of the throttle valve 14, the fuel injection valve 20, the ignition device 22, the lock-up clutch 52, and the transmission 54, respectively.

In controlling the control amount, the control device 70 refers to an output signal Scr of a crank angle sensor 80 that outputs a pulse at each angle interval between the tooth portions 42 provided at every 10° CA excluding the toothless portion 44, and an intake air amount Ga detected by an air flow meter 82. The control device 70 refers to a coolant temperature THW, which is a temperature of a coolant of the internal combustion engine 10 detected by a coolant temperature sensor 84, an outside air temperature Ta detected by an outside air temperature sensor 86, and a shift position Vsft of the transmission 54 detected by a shift position sensor 88.

The control device 70 includes a CPU 72, a ROM 74, a storage device 76 which is an electrically rewritable nonvolatile memory, a communicator 77, and a peripheral circuit 78, which can be communicated by a local network 79. The peripheral circuit 78 includes a circuit that generates a clock signal defining an internal operation, a power supply circuit, a reset circuit, and the like. The storage device 76 stores practical mapping data 76a and evaluation mapping data 76b. Here, the practical mapping data 76a is data actually used for monitoring a misfire of the internal combustion engine 10. On the other hand, the evaluation mapping data 76b is data of which reliability is to be evaluated, and is not used for monitoring a misfire of the internal combustion engine 10. The evaluation mapping data 76b is implemented on the control device 70 after the data is learned to some extent by machine learning.

The control device 70 controls the control amounts by causing the CPU 72 to execute a program stored in the ROM 74. Specifically, the ROM 74 stores a misfire detection program 74a and a relearning subprogram 74b. Here, the relearning subprogram 74b is a program for executing relearning of the evaluation mapping data 76b.

The communicator 77 is a device for communicating with a data analysis center 100 via a network 110 outside the vehicle VC1. The data analysis center 100 analyzes data transmitted from a plurality of vehicles VC1, VC2, .... The data analysis center 100 includes a CPU 102, a ROM 104, a storage device 106, a communicator 107, and a peripheral circuit 108, and the CPU 102, the ROM 104, the storage device 106, the communicator 107, and the peripheral circuit 108 can be communicated by a local network 109. The ROM 104 stores a relearning main program 104a that defines a process of generating data for relearning the evaluation mapping data 76b based on data transmitted from the vehicles VC1, VC2, .... The storage device 106 stores a relearning data 106a that is data for relearning a mapping defined by the evaluation mapping data 76b, which is transmitted from the vehicles VC1, VC2,....

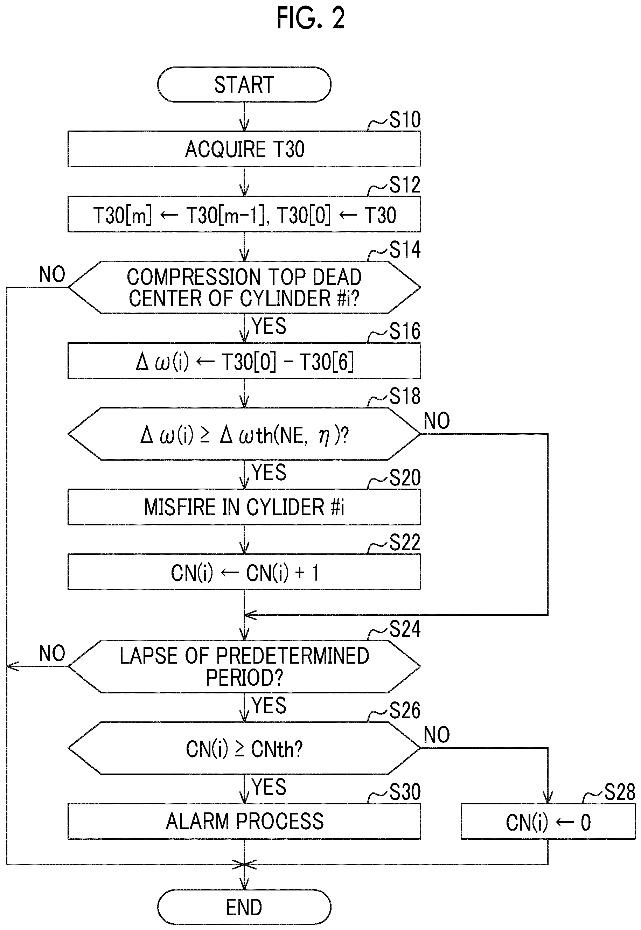

FIG. 2 illustrates a part of a process realized by the CPU 72 executing the misfire detection program 74a stored in the ROM 74. The process illustrated in FIG. 2 is a process using the practical mapping data 76a. The process illustrated in FIG. 2 is repeatedly executed, for example, at a predetermined cycle. In the following description, the step number of each process is represented by a number prefixed with "S".

In the series of processes illustrated in FIG. 2, the CPU 72 first acquires a minute rotation time T30 (S10). The minute rotation time T30 is a time needed for the crankshaft 24 to rotate by 30° CA and is calculated by the CPU 72 based on the output signal Scr of the crank angle sensor 80. Next, the CPU 72 sets the latest minute rotation time T30 acquired in the process of S10 to a minute rotation time T30[0], and sets a variable "m" of a minute rotation time T30[m] to be larger as the minute rotation time T30 has been acquired earlier (S12). That is, assuming that "m = 1, 2, 3, ... ", a minute rotation time T30[m-1] immediately before the process of S12 is performed is set as the minute rotation time T30[m]. Thereby, for example, the minute rotation time T30 acquired by the process of S10 when the process of FIG. 2 was executed last time is the minute rotation time T30[1]. Among the minute rotation times T30[0], T30[1], T30[2], ... , the minute rotation times T30 that are adjacent in time series indicate times needed for rotation at an angle interval of 30° CA adjacent to each other, and the angle intervals do not have overlapping portions.

Next, the CPU 72 determines whether or not the minute rotation time T30 acquired in the process of S10 is a time needed for rotation of any of the cylinders #1 to #4 at an angle interval from 30° CA before a compression top dead center to the compression top dead center (S14). Then, when determination is made that the minute rotation time T30 is the time needed for the rotation at the angle interval to the compression top dead center (S14: YES), the CPU 72 assigns "T30[0] - T30[6]" to a rotation fluctuation amount Δω)(i) of the cylinder #i to be determined in order to determine whether or not a misfire has occurred in the cylinder at the compression top dead center (S16). That is, the rotation fluctuation amount Δω is quantified by subtracting the time needed for rotation of the cylinder at an angle interval from 30° CA before the compression top dead center to the compression top dead center, which is the compression top dead center immediately before the cylinder to be determined as a misfire, from the time needed for rotation of the cylinder to be determined as a misfire at an angle interval from 30° CA before the compression top dead center to the compression top dead center.

Next, the CPU 72 determines whether or not the rotation fluctuation amount Δω)(i) is equal to or greater than a specified amount Δωth (S18). The process is a process of determining whether or not a misfire has occurred in a cylinder to be determined as a misfire. Here, the CPU 72 variably sets the specified amount Δωth based on a rotation speed NE and a charging efficiency η.

Specifically, the CPU 72 performs a map calculation of the specified amount Δωth in a state where map data using the rotation speed NE and the charging efficiency η as input variables and the specified amount Δωth as an output variable is stored in the storage device 76 in advance. The map data is set data of discrete values of the input variables and values of output variables corresponding to respective values of the input variables. Further, in the map calculation, for example, when the value of the input variable matches any of the values of the input variables of the map data, the corresponding value of the output variable of the map data is used as the calculation result. Alternatively, when the value of the input variable does not match any of the values of the input variables of the map data, the map calculation may be a process in which values obtained by interpolating values of a plurality of output variables included in map data are used as calculation results.

Incidentally, the rotation speed NE is calculated by the CPU 72 based on the output signal Scr of the crank angle sensor 80. Here, the rotation speed NE is an average value of the rotation speed when the crankshaft 24 rotates by an angle interval larger than an appearance interval of a compression top dead center (180° CA in the present embodiment). The rotation speed NE is desirably an average value of the rotation speed when the crankshaft 24 rotates by a rotation angle equal to or more than one rotation of the crankshaft 24. Here, the average value is not limited to a simple average value, and may be, for example, a value obtained in an exponential moving average process. In short, the average value may be a value obtained by calculating a low-frequency component from which higher-order components that fluctuate at approximately the appearance interval of the compression top dead center are removed. The charging efficiency η is calculated by the CPU 72 based on the rotation speed NE and the intake air amount Ga.

The processes of S16 and S18 are processes using the practical mapping data 76a. That is, the practical mapping data 76a defines a mapping that outputs a logical value according to whether or not a misfire has occurred in a cylinder to be determined as an output value by inputting the minute rotation time T30[0] and the minute rotation time T30[6]. Here, the logical value is a value regarding whether the proposition that the rotation fluctuation amount Δω)(i) is equal to or greater than the specified amount Δωth is true or false.

When determination is made that the rotation fluctuation amount Δω(i) is equal to or greater than the specified amount Δωth (S18: YES), the CPU 72 determines that a misfire has occurred in the cylinder #i (S20). Next, the CPU 72 increments a misfire counter CN(i) of the cylinder #i (S22). Then, the CPU 72 determines whether or not a logical sum of the lapse of a predetermined period from the first execution of the process of S18 with the misfire counter CN(i) being initialized and the lapse of a predetermined period after the process of S28 to be described later is true (S24). Then, when determination is made that the logical sum is true (S24: YES), the CPU 72 determines whether or not the misfire counter CN(i) is equal to or greater than a threshold CNth (S26). When determination is made that the misfire counter CN(i) is less than the threshold CNth (S26: NO), the CPU 72 initializes the misfire counter CN(i) (S28).

On the other hand, when determination is made that the misfire counter CN(i) is equal to or greater than the threshold CNth (S26: YES), the CPU 72 operates a warning light 90 illustrated in FIG. 1 to alarm a user that an abnormality has occurred (S30). When the process of S28 or S30 is completed, or when a negative determination is made in the process of S14 or S24, the CPU 72 temporarily ends the series of processes illustrated in FIG. 2.

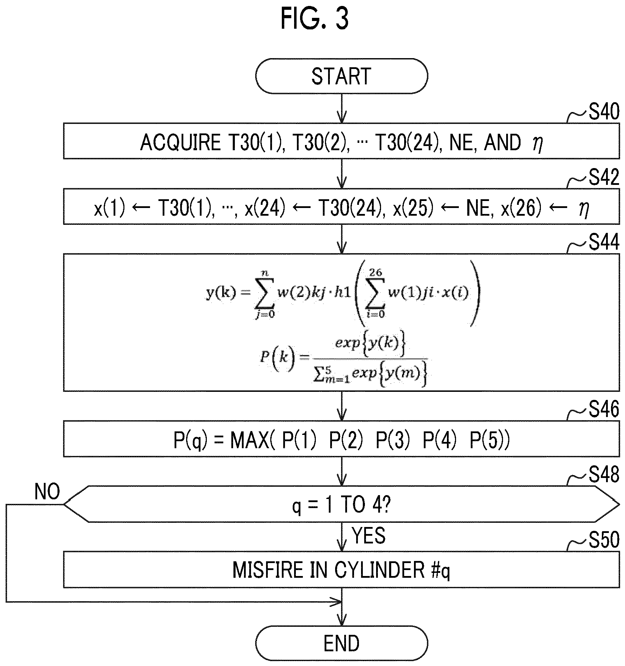

FIG. 3 illustrates a partial procedure of a process realized by the CPU 72 executing the misfire detection program 74a stored in the ROM 74. The process illustrated in FIG. 3 is a process using the evaluation mapping data 76b.

In the series of processes illustrated in FIG. 3, the CPU 72 first acquires minute rotation times T30(1), T30(2), ..., T30(24), the rotation speed NE, and the charging efficiency η (S40). Here, the minute rotation times T30(1), T30(2), ... are different from the minute rotation times T30[1], T30[2], ... in FIG. 2, and particularly, the minute rotation times T30(1), T30(2), ... indicate that the larger the number in parentheses, the later the value. Each of the minute rotation times T30(1) to T30(24) is a rotation time at each of 24 angle intervals obtained by equally dividing the rotation angle region of 720° CA by 30° CA.

Next, the CPU 72 assigns the values acquired by the process of S40 to input variables x(1) to x(26) of the mapping defined by the evaluation mapping data 76b (S42). Specifically, assuming that "s = 1 to 24", the CPU 72 assigns a minute rotation time T30(s) to an input variable x(s). That is, the input variables x(1) to x(24) are time-series data of the minute rotation time T30. The CPU 72 assigns the rotation speed NE to the input variable x(25) and assigns the charging efficiency η to the input variable x(26).

Next, the CPU 72 calculates values of misfire variables P(1) to P(5) by inputting the input variables x(1) to x(26) to the mapping defined by the evaluation mapping data 76b (S44). Here, assuming that "i = 1 to 4", the misfire variable P(i) is a variable having a larger value when a probability that a misfire has occurred in the cylinder #i is high than when it is low. The misfire variable P(5) is a variable having a larger value when a probability that no misfire has occurred in any of the cylinders #1 to #4 is high than when it is low.

Specifically, the mapping defined by the evaluation mapping data 76b is a neural network having a single intermediate layer. The neural network includes a coefficient w(1)ji (j = 0 to n, i = 0 to 26) and an activation function h1(x) as a nonlinear mapping that nonlinearly transforms each output of a linear mapping defined by the coefficient w(1)ji. In the present embodiment, a hyperbolic tangent is exemplified as the activation function h1(x). Incidentally, w(1)j0 and the like are bias parameters, and the input variable x(0) is defined as "1".

The neural network includes a coefficient w(2)kj (k = 1 to 5, j = 0 to n) and a softmax function that outputs the misfire variables P(1) to P(5) by inputting each of prototype variables y(1) to y(5), which are outputs of a linear mapping defined by the coefficient w(2)kj.

Next, the CPU 72 specifies the largest one among the misfire variables P(1) to P(5) (S46). Then, the CPU 72 determines whether a misfire variable P(q) that is the largest one is any of the misfire variables P(1) to P(4) or the misfire variable P(5) (S48). Then, when determination is made that the maximum misfire variable P(q) is any of the misfire variables P(1) to P(4) (S48: YES), the CPU 72 determines that a misfire has occurred in the cylinder #q (S50).

When the process of S50 is completed, or when a negative determination is made in the process of S48, the CPU 72 temporarily ends the series of processes illustrated in FIG. 3.

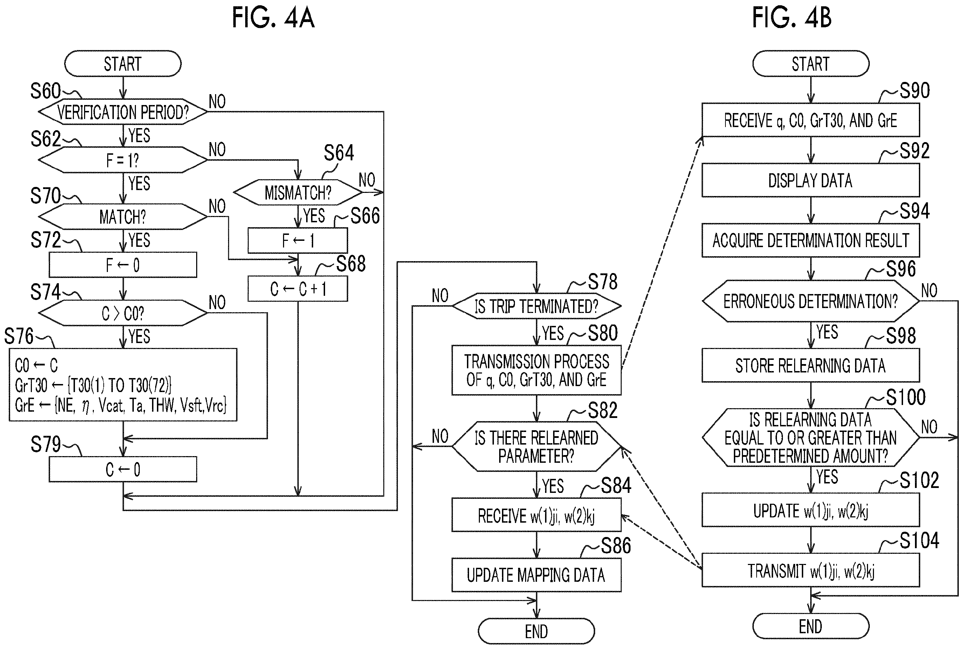

FIGS. 4A and 4B illustrate procedures of processes related to relearning of the evaluation mapping data 76b according to the present embodiment. The process illustrated in FIG. 4A is realized by the CPU 72 executing the relearning subprogram 74b stored in the ROM 74 illustrated in FIG. 1. The process illustrated in FIG. 4B is realized by the CPU 102 executing the relearning main program 104a stored in the ROM 104. Hereinafter, the processes illustrated in FIGS. 4A and 4B will be described along the time series of processes related to relearning.

In the series of processes illustrated in FIG. 4A, the CPU 72 first determines whether or not the evaluation period is a verification period of the reliability of the evaluation mapping data 76b (S60). Specifically, in the present embodiment, the following period is set as the verification period.
(A) A period in which the coolant temperature THW is equal to or lower than a predetermined temperature: When the coolant temperature THW is low, the combustion tends to be unstable, and it is more difficult to improve the detection accuracy of a misfire than when the coolant temperature THW is high. Therefore, this period is included in the verification period.
(B) A period in which the outside air temperature Ta is equal to or lower than a specified temperature: When the outside air temperature Ta is low, the combustion tends to be unstable, and it is more difficult to improve the detection accuracy of a misfire than when the outside air temperature Ta is high. Therefore, this period is included in the verification period.
(C) An execution period of the warm-up process of the catalyst 30: During the execution period of the warm-up process of the catalyst 30, since combustion is performed with reduced combustion efficiency, the combustion tends to be unstable, and it is more difficult to improve the detection accuracy of a misfire as compared to after the catalyst 30 is warmed up. Therefore, this period is included in the verification period.
(D) A period in which the charging efficiency η is equal to or less than a predetermined value: At a light load, the combustion tends to be unstable as compared to when the load is high, and it is more difficult to improve the detection accuracy of a misfire as compared to a medium and high load. Therefore, this period is included in the verification period.
(E) A period in which an amount ΔNE of change per predetermined time in the rotation speed NE is equal to or greater than a predetermined value: In a transient operation, the detection accuracy of a misfire is more likely to be lower than in a steady operation. Therefore, this period is included in the verification period.

When determination is made that the evaluation period is the verification period (S60: YES), the CPU 72 determines whether or not a flag F is "1" (S62). Here, the flag F is "1" when the misfire determination result by the process illustrated in FIG. 2 does not match the misfire determination result by the process illustrated in FIG. 3, and the flag F is "0" when the determination results match with each other. When determination is made that the flag F is "0" (S62: NO), the CPU 72 determines whether or not there is a mismatch between the misfire determination result by the process illustrated in FIG. 2 and the misfire determination result by the process illustrated in FIG. 3 (S64). The CPU 72 determines that there is a mismatch when the results of the four determinations by the process of S18 in FIG. 2 at the same combustion cycle are inconsistent with the results of the process of S46 in FIG. 3. That is, for example, although determination is made in the process of S18 that the rotation fluctuation amount Δω(1) of the cylinder #1 is equal to or greater than the specified amount Δωth, the CPU 72 determines that there is a mismatch when the P(5) is selected in the process of S46.

When determination is made that there is a mismatch (S64: YES), the CPU 72 assigns "1" to the flag F (S66). Next, the CPU 72 increments a counter C (S68). On the other hand, when determination is made that the flag F is "1" (S62: YES), the CPU 72 determines whether or not the misfire determination result by the process illustrated in FIG. 2 matches the misfire determination result by the process illustrated in FIG. 3 (S70). Then, when determination is made that there is a mismatch (S70: NO), the CPU 72 proceeds to the process of S68, and when determination is made that there is a match (S70: YES), the CPU 72 assigns "0" to the flag F (S72). Then, the CPU 72 determines whether or not the counter C is greater than a maximum value C0 (S74). Then, when determination is made that the counter C is greater than the maximum value C0 (S74: YES), the CPU 72 updates the maximum value C0 to the current value of the counter C, and updates a rotation time set GrT30 and an extra information set GrE (S76).

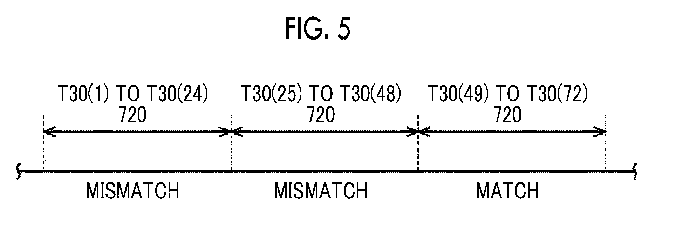

Specifically, the rotation time set GrT30 is a set of minute rotation times T30(1) to T30(72) for three combustion cycles, as illustrated in FIG. 5. However, the rotation time set GrT30 is updated such that the minute rotation times T30(49) to T30(72) correspond to the combustion cycle in which determination is made that the misfire determination result by the process illustrated in FIG. 2 matches the misfire determination result by the process illustrated in FIG. 3 in the latest process of S70. Here, when the maximum value C0 is equal to or greater than "2", the minute rotation times T30(1) to T30(24) and the minute rotation times T30(25) to T30(48) all correspond to the combustion cycle in which the misfire determination result by the process illustrated in FIG. 2 and the misfire determination result by the process illustrated in FIG. 3 are different from each other. The initial value of the maximum value C0 is zero.

The extra information set GrE includes the rotation speed NE, the charging efficiency η, a warm-up control variable Vcat indicating whether or not a warm-up process of the catalyst 30 is executed, the outside air temperature Ta, the coolant temperature THW, the shift position Vsft of the transmission 54, and an engagement variable Vrc, which is a variable indicating the engagement state of the lock-up clutch 52. It is desirable that each of these variables is a value in the combustion cycle before the combustion cycle for which an affirmative determination is made in the process of S70. The extra information set GrE is a set of variables that affect the rotation behavior of the crankshaft 24 according to the presence or absence of a misfire in addition to the rotation speed NE and the charging efficiency η as operating point variables, which are inputs of the mapping defined by the evaluation mapping data 76b. That is, since inertia constants from the crankshaft 24 to the drive wheels 60 are different from each other depending on the engagement state of the lock-up clutch 52 or the shift position Vsft, the rotation behavior of the crankshaft 24 becomes different. The warm-up control variable Vcat, the outside air temperature Ta, and the coolant temperature THW are variables indicating whether or not the combustion state is stable.

Returning to FIGS. 4A and 4B, when the process of S76 is completed, or when a negative determination is made in the process of S74, the CPU 72 initializes the counter C (S79). Then, when the process of S68 or S79 is completed, or when a negative determination is made in the process of S60 or S64, the CPU 72 determines whether or not a trip is terminated (S78). Here, the trip is one period in which a traveling permission signal of a vehicle is in an ON state. In the present embodiment, the traveling permission signal corresponds to an ignition signal. When determination is made that the trip is terminated (S78: YES), the CPU 72 operates the communicator 77 to transmit information "q" regarding the largest one among the misfire variables P(1) to P(5), the maximum value C0, the rotation time set GrT30, and the extra information set GrE to the data analysis center 100 (S80).

On the other hand, as illustrated in FIG. 4B, the CPU 102 receives the information "q" regarding the largest one among the misfire variables P(1) to P(5), the maximum value C0, the rotation time set GrT30, and the extra information set GrE (S90). Then, the CPU 102 displays, on a display device 112 illustrated in FIG. 1, waveform data on the rotation behavior of the crankshaft 24 represented by the rotation time set GrT30, the information "q" regarding the largest one among the misfire variables P(1) to P(5), the maximum value C0, and the extra information set GrE (S92). The process is a process of providing a skilled person with information that allows the skilled person to determine whether or not a misfire has occurred. That is, a skilled person can determine with high accuracy whether or not a misfire has occurred by visually recognizing the waveform data. At that time, by referring to the information of the extra information set GrE, the determination as to whether or not a misfire has occurred becomes more reliable. Thereby, the skilled person can determine whether or not the misfire determination using the evaluation mapping data 76b is an erroneous determination, based on the determination as to whether or not a misfire has occurred.

When the determination result is input by the skilled person operating an interface 114 illustrated in FIG. 1, the CPU 102 acquires the result (S94). Then, the CPU 102 determines whether or not the determination result input by the operation of the interface 114 is a determination that the misfire determination using the evaluation mapping data 76b is an erroneous determination (S96). Then, when determination is made that the determination is an erroneous determination (S96: YES), the CPU 102 stores at least the minute rotation times T30(25) to T30(48) among the data received by the process of S90, the rotation speed NE, the charging efficiency η, and the determination result by the skilled person as to whether or not a misfire has occurred, as the relearning data 106a (S98). The relearning data 106a includes data based on data received from not only the vehicle VC1 but also other vehicles VC2, ... equipped with an internal combustion engine having the same specifications as the internal combustion engine 10.

Next, the CPU 102 determines whether or not the relearning data 106a stored in the storage device 106 is equal to or greater than a predetermined amount (S100). Then, when determination is made that the relearning data is equal to or greater than the predetermined amount (S100: YES), the CPU 102 updates the coefficients w(1)ji, w(2)kj, which are learned parameters of the evaluation mapping data 76b, using the relearning data 106a as training data (S102). That is, the CPU 72 calculates the misfire variables P(1) to P(5) by using, as the input variables x(1) to x(26), data other than data on the determination result by the skilled person as to whether or not a misfire has occurred among the training data, and generates teacher data based on the data on the determination result by the skilled person as to whether or not a misfire has occurred. For example, when the skilled person determines that a misfire has occurred in the cylinder #1, P(1) = 1 and P(2) to P(5) = 0. For example, when the skilled person determines that the state is normal, P(1) to P(4) = 0 and P(5) = 1. Then, the coefficients w(1)ji, w(2)kj are updated by a known method such that the absolute value of the difference between the teacher data and the misfire variables P(1) to P(5) output by the neural network becomes smaller.

The CPU 102 operates the communicator 107 to transmit the updated coefficients w(1)ji, w(2)kj to the vehicles VC1, VC2, ... , as a relearned parameter (S104). When the process of S104 is completed, or when a negative determination is made in the process of S96 or S100, the CPU 102 temporarily ends the series of processes illustrated in FIG. 4B.

Meanwhile, as illustrated in FIG. 4A, the CPU 72 determines whether or not there is the relearned parameter transmitted from the data analysis center 100 (S82). Then, when determination is made that there is the relearned parameter (S82: YES), the CPU 72 receives the coefficients w(1)ji, w(2)kj (S84), and updates the evaluation mapping data 76b stored in the storage device 76 (S86).

In the calculation process of the misfire variables P(1) to P(5), information on the coefficients w(1)ji, w(2)kj, the activation function h1, and the information that the softmax function is used in an output layer of the neural network are needed. In this regard, for example, when an affirmative determination is made in the process of S100, the CPU 102 may instruct the control device 70 to transmit data related to the process, or store the data in the storage device 106 in advance.

When the process of S86 is completed, or when a negative determination is made in the process of S78 or S82, the CPU 72 temporarily ends the series of processes illustrated in FIG. 4A. Here, the operation and effect of the present embodiment will be described.

The CPU 72 monitors the presence or absence of a misfire of the internal combustion engine 10 by executing the process illustrated in FIG. 2 based on the practical mapping data 76a, and executes an alarm process to cope with the misfire when the misfire frequently occurs. The CPU 72 executes the process illustrated in FIG. 3 based on the evaluation mapping data 76b to execute a misfire determination using the evaluation mapping data 76b. Then, the CPU 72 determines whether or not the misfire determination result using the evaluation mapping data 76b and the misfire determination result using the practical mapping data 76a are consistent with each other, and when determination is made that the misfire determination results are not consistent with each other, the CPU 72 transmits, to the data analysis center 100, input data and the like for misfire determination using the evaluation mapping data 76b because there is a possibility that the evaluation mapping data 76b may not be sufficiently learned.

On the other hand, the CPU 102 displays the input data and the like transmitted from the CPU 72 on the display device 112. Thereby, the skilled person determines whether or not a misfire has occurred based on waveform data or the like indicating the rotation behavior of the crankshaft 24, and determines whether or not the determination of the presence or absence of a misfire using the evaluation mapping data 76b is an erroneous determination based on the determination as to whether or not a misfire has occurred. When the determination result of the skilled person is a determination that the determination of the presence or absence of a misfire using the evaluation mapping data 76b is an erroneous determination, the CPU 102 stores at least some of the data transmitted from the vehicle side in the storage device 106, as the relearning data 106a. Then, when the relearning data 106a becomes equal to or greater than the predetermined amount, the CPU 102 updates the coefficients w(1)ji, w(2)kj, and transmits the updated coefficients to the vehicles VC1, VC2, ... , as relearned data.

Thus, in each of the vehicles VC1, VC2, ... , the evaluation mapping data 76b is updated with the coefficients w(1)ji, w(2)kj updated by using not only the data that caused the erroneous determination using the evaluation mapping data 76b in the own vehicle, but also the data that caused the erroneous determination using the evaluation mapping data 76b in the other vehicle.

Therefore, the evaluation mapping data 76b can be updated to data that can determine misfires in various situations with high accuracy. Then, in a case where determination is made that the evaluation mapping data 76b is more reliable by the skilled person's determination when a mismatch has occurred, the updated evaluation mapping data 76b can be used as practical mapping data 76a for monitoring a misfire. Furthermore, the learned model (mapping data) based on raw data stored on the vehicles VC1, VC2, ... can be stored as practical mapping data from the beginning on a control device mounted on a newly developed vehicle equipped with an internal combustion engine having the same number of cylinders.

According to the present embodiment described above, the following effects can be further obtained.
(1) When a mismatch occurs between the determination result using the practical mapping data 76a and the determination result using the evaluation mapping data 76b, not only the minute rotation times T30(25) to T30(48) in the combustion cycles when the mismatch occurs, but also the minute rotation times T30(49) to T30(72) in the combustion cycles restored from a mismatch to a match are transmitted to the data analysis center 100. Thereby, not only the information on the state where the mismatch has occurred but also information at the time of transition to the state where the mismatch has been resolved is transmitted. Therefore, as compared with the case where just the minute rotation times T30(25) to T30(48), which are the waveform data of one combustion cycle when the mismatch occurs, are transmitted, a skilled person can determine with higher accuracy whether or not a misfire has occurred.
(2) When a mismatch occurs between the determination result using the practical mapping data 76a and the determination result using the evaluation mapping data 76b, the extra information set GrE is also transmitted. Thereby, as compared with the case where just the minute rotation times T30(1) to T30(72), which are the waveform data indicating the rotation behavior of the crankshaft 24, are transmitted, a skilled person can determine with higher accuracy whether or not a misfire has occurred.
(3) When a mismatch occurs between the determination result using the practical mapping data 76a and the determination result using the evaluation mapping data 76b, the number of times that mismatches occurred continuously is counted, and just the maximum number of times that mismatches occurred continuously in one trip is transmitted to the data analysis center 100. Here, when compared with a case where a mismatch occurred just once, in a case where mismatches occurred continuously, there is a high possibility that there is a difference between the reliability of misfire determination using the practical mapping data 76a and the reliability of misfire determination using the evaluation mapping data 76b instead of the influence of accidental noise or the like. Therefore, by transmitting just the maximum number of times that mismatches occurred continuously, it is possible to transmit information that is as useful as possible in specifying the characteristics of the evaluation mapping data 76b while reducing the amount of data needed for communication with the data analysis center 100.
(4) When a mismatch occurs between the determination result using the practical mapping data 76a and the determination result using the evaluation mapping data 76b, data at the time of occurrence of the mismatch is transmitted to the data analysis center 100 when the trip is terminated. When the trip is terminated, since the calculation load of the control device 70 is smaller than when the vehicle is traveling, it is possible to suppress the calculation load applied to the control device 70 from being excessively increased by the transmission process. Second Embodiment

Hereinafter, a second embodiment will be described with reference to the drawings, focusing on differences from the first embodiment.

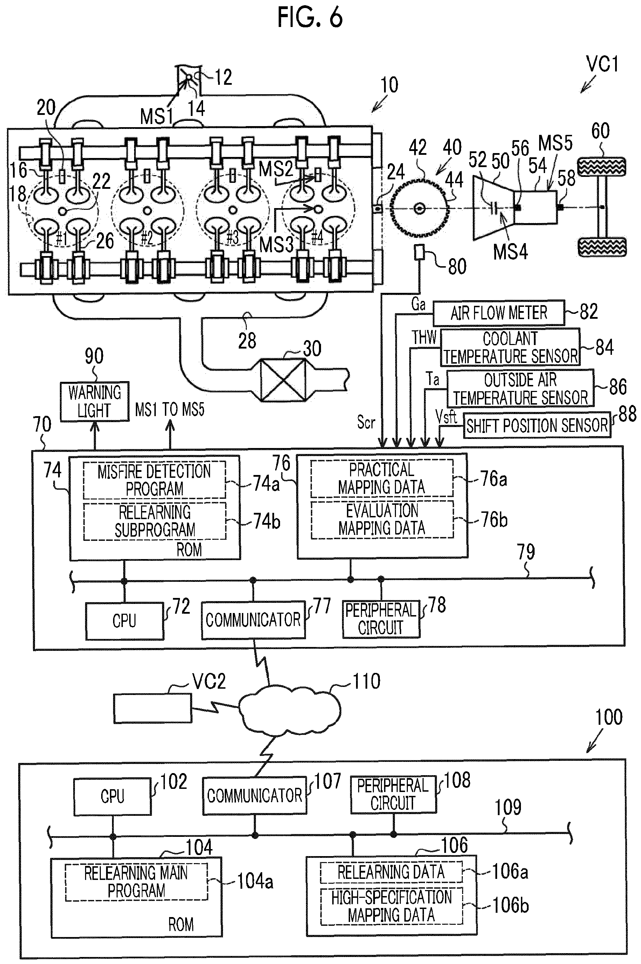

FIG. 6 is a diagram illustrating a configuration of a learning control system according to a second embodiment. In FIG. 6, members corresponding to the members illustrated in FIG. 1 above are denoted by the same reference numerals for convenience. The storage device 106 illustrated in FIG. 6 stores high-specification mapping data 106b. The high-specification mapping data 106b is data in which misfire determination simulating a skilled person can be made in exchange for a large number of dimensions of input variables and a complicated mapping structure. In learning the high-specification mapping data 106b, the rotation time set GrT30 and the extra information set GrE in the processes of FIGS. 4A and 4B and the determination result of the skilled person by the processes of S94 and S96 are used as training data.

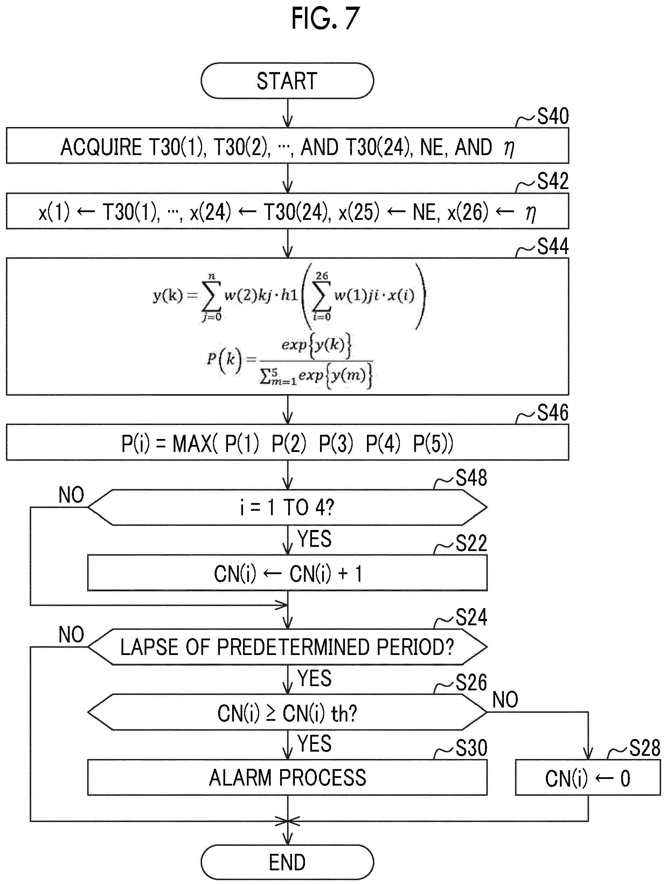

In the present embodiment, an example is shown in which the reliability of the evaluation mapping data 76b is improved by the process of the first embodiment, and the evaluation mapping data 76b with improved reliability is implemented as the practical mapping data 76a. FIG. 7 illustrates a part of a process realized by the CPU 72 executing the misfire detection program 74a stored in the ROM 74. The process illustrated in FIG. 7 is a process using the practical mapping data 76a. The process illustrated in FIG. 7 is repeatedly executed, for example, at a predetermined cycle. In FIG. 7, the processes corresponding to the processes illustrated in FIGS. 2 and 3 are denoted by the same step numbers for convenience.

In the series of processes illustrated in FIG. 7, the CPU 72 executes the same processes as the processes S40 to S48 of FIG. 3. That is, in the present embodiment, since the evaluation mapping data 76b used in the process of FIG. 3 is the practical mapping data 76a, the processes of S40 to S48 are executed using the practical mapping data 76a. In FIG. 7, since the largest one among the misfire variables P(1) to P(5) is described as the misfire variable P(i), the description is different from the misfire variable P(q) in FIG. 3. However, the process itself is the same.

Then, when an affirmative determination is made in the process of S48, the CPU 72 executes the processes of S22 to S30 for the cylinder #i for which a misfire is determined to have occurred, while when a negative determination is made in the process of S48, the CPU 72 executes the processes of S24 to S30 for the cylinder #i for which a misfire is determined to have occurred.

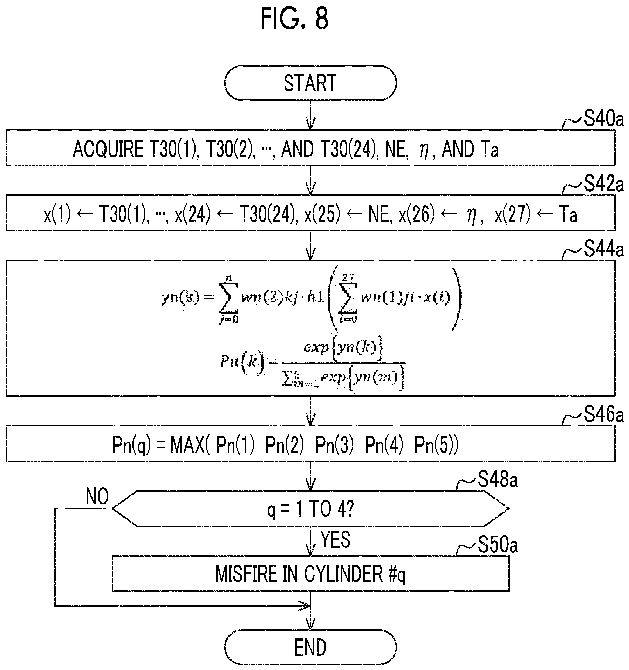

FIG. 8 illustrates a partial procedure of a process realized by the CPU 72 executing the misfire detection program 74a stored in the ROM 74. The process illustrated in FIG. 8 is a process using the evaluation mapping data 76b.

In the series of processes illustrated in FIG. 8, the CPU 72 first acquires the outside air temperature Ta in addition to the minute rotation times T30(1), T30(2), ... , T30(24), the rotation speed NE, and the charging efficiency η (S40a).

Next, the CPU 72 assigns the values acquired by the process of S40a to input variables x(1) to x(27) of the mapping defined by the evaluation mapping data 76b (S42a). Specifically, the CPU 72 executes the same process as the process of S42 for the input variables x(1) to x(26), and assigns the outside air temperature Ta to the input variable x(27).

Next, the CPU 72 calculates misfire variables Pn(1) to Pn(5) corresponding to the misfire variables P(1) to P(5) by inputting the input variables x(1) to x(27) to the mapping defined by the evaluation mapping data 76b (S44a). Specifically, the mapping defined by the evaluation mapping data 76b is a neural network having a single intermediate layer. The neural network includes a coefficient wn(1)ji (j = 0 to n, i = 0 to 27) and an activation function h1(x) as an input-side nonlinear mapping that nonlinearly transforms each output of a linear mapping defined by the coefficient w(1)ji. In the present embodiment, a hyperbolic tangent is exemplified as the activation function h1(x). Incidentally, wn(1)j0 and the like are bias parameters, and the input variable x(0) is defined as "1".

The neural network includes a coefficient wn(2)kj (k = 1 to 5, j = 0 to n) and a softmax function that outputs the misfire variable Pn by inputting each of prototype variables yn(1) to yn(5), which are outputs of a linear mapping defined by the coefficient wn(2)kj.

Then, the CPU 72 specifies a misfire variable Pn(q) that is the largest one among the misfire variables Pn(1) to Pn(5) (S46a). Then, the CPU 72 determines whether or not the misfire variable Pn(q) that is the largest one is any of "1 to 4" (S48a). Then, when determination is made that the maximum misfire variable Pn(q) is any of "1 to 4" (S48a: YES), the CPU 72 determines that a misfire has occurred in the cylinder #q (S50a). When the process of S50a is completed, or when a negative determination is made in the process of S48a, the CPU 72 temporarily ends the series of processes illustrated in FIG. 8.

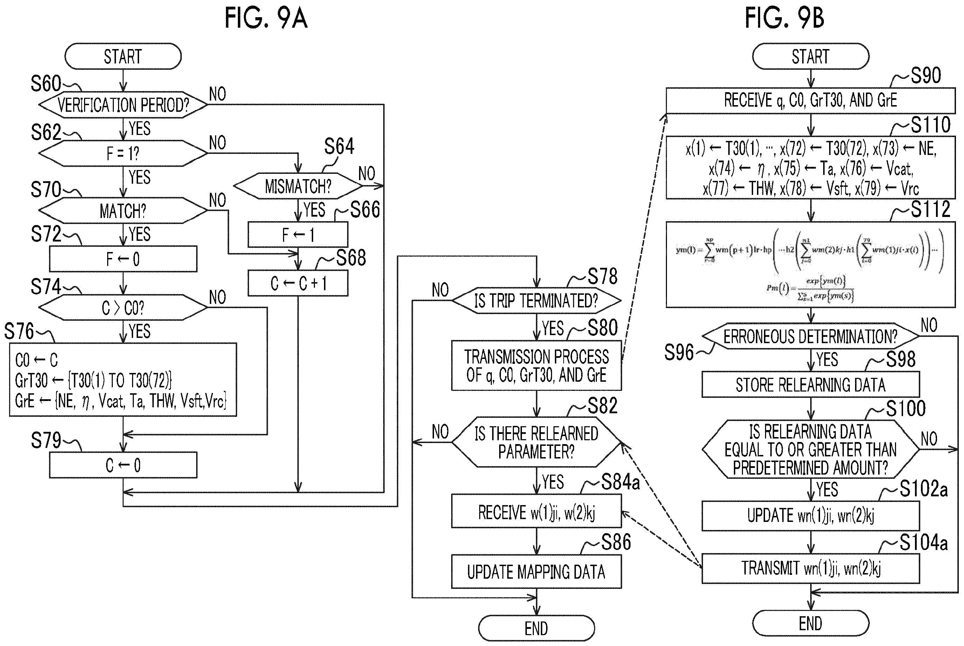

FIGS. 9A and 9B illustrate procedures of processes related to relearning of the evaluation mapping data 76b according to the present embodiment. The process illustrated in FIG. 9A is realized by the CPU 72 executing the relearning subprogram 74b stored in the ROM 74 illustrated in FIG. 6. The process illustrated in FIG. 9B is realized by the CPU 102 executing the relearning main program 104a stored in the ROM 104. In FIGS. 9A and 9B, the processes corresponding to the processes illustrated in FIGS. 4A and 4B are denoted by the same step numbers for convenience. Hereinafter, the processes illustrated in FIGS. 9A and 9B will be described along the time series of processes related to relearning.

In the series of processes illustrated in FIG. 9B, when the process of S90 is completed, the CPU 102 assigns the corresponding values to the input variables x(1) to x(79) of the mapping defined by the high-specification mapping data 106b (S110). That is, assuming that "s = 1 to 72", the CPU 102 assigns the minute rotation time T30(s) to the input variable x(s), assigns the rotation speed NE to the input variable x(73), and assigns the charging efficiency η to the input variable x(74). The CPU 102 assigns the outside air temperature Ta to the input variable x(75), assigns the warm-up control variable Vcat to the input variable x(76), assigns the coolant temperature THW to the input variable x(77), assigns the shift position Vsft to the input variable x(78), and assigns the engagement variable Vrc to the input variable x(79). Next, the CPU 102 calculates misfire variables Pm(1) to Pm(5) corresponding to the misfire variables Pn(1) to Pn(5) by assigning the input variables x(1) to x(79) to the mapping defined by the high-specification mapping data 106b (S112).

In the present embodiment, the mapping defined by the high-specification mapping data 106b includes a neural network in which the number of intermediate layers is "p", and activation functions h1 to hp of each intermediate layer are hyperbolic tangents. Here, assuming that m = 1, 2, ... , p, the value of each node of the m-th intermediate layer is generated by inputting the output of the linear mapping defined by a coefficient wm(m) to the activation function hm. Here, the values n1, n2, ... , np are the numbers of nodes of the first, second, ..., p-th intermediate layers, respectively. For example, the value of each node in the first intermediate layer is generated by inputting the output when the input variables x(1) to x(79) are input to the linear mapping defined by coefficients wm(1)ji (j = 0 to n1, i = 0 to 79) to the activation function h1. Incidentally, wm(1)j0 and the like are bias parameters, and the input variable x(0) is defined as "1".

The neural network includes a coefficient wm(p+1)lr (1 = 1 to 5, r = 0 to np) and a softmax function that outputs the misfire variables Pm(1) to Pm(5) by inputting each of prototype variables ym(1) to ym(5), which are outputs of a linear mapping defined by the coefficient wm(p+1)lr.

Then, the CPU 102 determines whether or not the misfire determination using the evaluation mapping data 76b is an erroneous determination (S96). That is, when the largest one among the misfire variables Pm(1) to Pm(5) and the information "q" regarding the largest one among the misfire variables Pn(1) to Pn(5) received by the process of S90 are not consistent with each other, the CPU 102 determines that the misfire determination is an erroneous determination. Specifically, for example, when the largest one among the misfire variables Pm(1) to Pm(5) is the misfire variable Pm(1), while the largest one among the misfire variables Pn(1) to Pn(5) is the misfire variable Pn(5), the CPU 102 determines that the misfire determination is an erroneous determination.

Then, when determination is made that the misfire determination is an erroneous determination (S96: YES), the CPU 102 executes the processes of S98 and S100, and when an affirmative determination is made in the process of S100, the CPU 102 updates the coefficients wn(1)ji, wn(2)kj, which are learned parameters of the evaluation mapping data 76b, using the relearning data 106a as training data (S102a). The CPU 102 operates the communicator 107 to transmit the updated coefficients wn(1)ji, wn(2)kj to the vehicles VC1, VC2, ... , as a relearned parameter (S104a). When the process of S104a is completed, or when a negative determination is made in the process of S96 or S100, the CPU 102 temporarily ends the series of processes illustrated in FIG. 9B.

Meanwhile, as illustrated in FIG. 9A, when determination is made that there is the relearned parameter (S82: YES), the CPU 72 receives the coefficients wn(1)ji, wn(2)kj (S84a), and updates the evaluation mapping data 76b stored in the storage device 76 (S86).

When the process of S86 is completed, or when a negative determination is made in the process of S78 or S82, the CPU 72 temporarily ends the series of processes illustrated in FIG. 9A. As described above, in the present embodiment, when the determination result using the practical mapping data 76a and the determination result using the evaluation mapping data 76b are not consistent with each other, the determination result using the evaluation mapping data 76b is verified by the determination using the high-specification mapping data 106b. Thus, the determination result using the evaluation mapping data 76b can be verified without relying on the determination by the skilled person.

### Third Embodiment

Hereinafter, a third embodiment will be described with reference to the drawings, focusing on differences from the second embodiment.

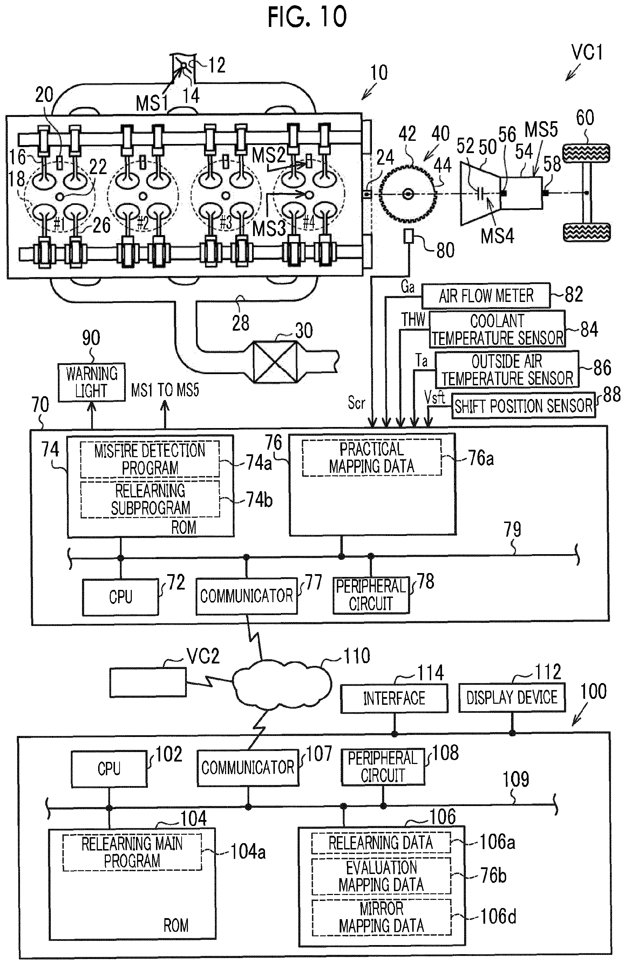

FIG. 10 is a diagram illustrating a configuration of a learning control system according to a third embodiment. In FIG. 10, members corresponding to the members illustrated in FIG. 1 above are denoted by the same reference numerals for convenience.

As illustrated in FIG. 10, in the present embodiment, although the practical mapping data 76a is stored in the storage device 76, the evaluation mapping data 76b is not stored therein. Meanwhile, the storage device 106 stores the evaluation mapping data 76b and mirror mapping data 106d which is the same mapping data as the practical mapping data 76a.

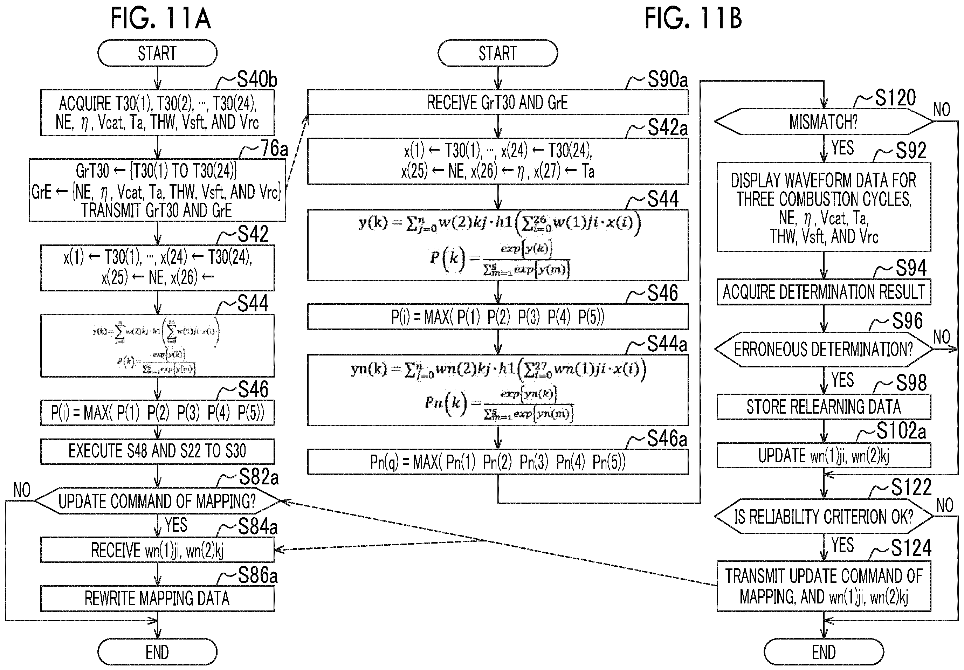

FIGS. 11A and 11B illustrate procedures of processes related to relearning of the evaluation mapping data 76b according to the present embodiment. The process illustrated in FIG. 11A is realized by the CPU 72 executing the relearning subprogram 74b stored in the ROM 74 illustrated in FIG. 10. The process illustrated in FIG. 11B is realized by the CPU 102 executing the relearning main program 104a stored in the ROM 104. In FIGS. 11A and 11B, the processes corresponding to the processes illustrated in FIGS. 4A and 4B are denoted by the same step numbers for convenience. Hereinafter, the processes illustrated in FIGS. 11A and 11B will be described along the time series of processes related to relearning.

As illustrated in FIG. 11A, the CPU 72 first acquires the minute rotation times T30(1) to T30(24), the rotation speed NE, the charging efficiency η, the warm-up control variable Vcat, the outside air temperature Ta, the coolant temperature THW, the shift position Vsft, and the engagement variable Vrc (S40b). Next, the CPU 72 transmits the rotation time set GrT30 and the extra information set GrE (S76a). Here, the rotation time set GrT30 is the minute rotation times T30(1) to T30(24) acquired in the process of S40b, and the extra information set GrE is the data other than the minute rotation times T30(1) to T30(24) among the data acquired in the process of S40b. Then, the CPU 72 executes the processes of S42 to S48 and S22 to S30, similarly to the processes of FIGS. 9A and 9B.

On the other hand, as illustrated in FIG. 11B, the CPU 102 receives the data transmitted by the process of S76a (S90a), and executes the same process as the process of S42a in FIG. 8. Then, the CPU 102 executes the same process as the processes of S44 and S46 in FIG. 7 by using the mirror mapping data 106d, and executes the same process as the processes of S44a and S46a in FIG. 8 by using the evaluation mapping data 76b.

Then, the CPU 102 determines whether or not there is a mismatch between the misfire variable P(i) that is the largest one among the misfire variables P(1) to P(5) and the misfire variable Pn(q) that is the largest one among the misfire variables Pn(1) to Pn(5) (S120). The process is a process of determining whether or not the misfire determination result using the practical mapping data 76a matches the misfire determination result using the evaluation mapping data 76b through the determination as to whether or not the misfire determination result using the mirror mapping data 106d matches the misfire determination result using the evaluation mapping data 76b.

Then, when determination is made that there is a mismatch (S120: YES), the CPU 102 executes the processes of S92 to S98 in FIG. 4B, and then executes the process of S102a in FIG. 9B. However, in the process of S92 here, data received by a plurality of processes of S90a, and minute rotation times T30 for three combustion cycles of a combustion cycle corresponding to a period determined as a mismatch by the process of S120 and combustion cycles before and after the period are used. The process can be realized by using the minute rotation time T30 newly acquired by the process of S90a in the process of S42a or the like in the next control cycle of FIG. 11B.

When the process of S102a is completed, or when a negative determination is made in the process of S120 or S96, the CPU 102 determines whether or not the coefficients wn(1)ji, wn(2)kj satisfy the reliability criterion (S122). Here, the CPU 102 may determine that the coefficients wn(1)ji, wn(2)kj satisfy the reliability criterion when the frequency at which a negative determination is made is greater than the frequency at which an affirmative determination is made by a predetermined amount or more in the process of S96. Then, when determination is made that the coefficients wn(1)ji, wn(2)kj satisfy the reliability criterion (S122: YES), the CPU 102 operates the communicator 107 to output a command to update the practical mapping data 76a to the evaluation mapping data 76b, and transmits the coefficients wn(1)ji, wn(2)kj (S124). When the process of S124 is completed, the CPU 102 temporarily ends the series of processes illustrated in FIG. 11B.

On the other hand, as illustrated in FIG. 11A, when determination is made that the update command of the mapping has been issued (S82a), the CPU 72 receives the coefficients wn(1) ji, wn(2)kj (S84a). Then, the CPU 72 rewrites the practical mapping data 76a using the received coefficients wn(1)ji, wn(2)kj (S86a).

When a negative determination is made in the process of S82a, or when the process of S86a is completed, the CPU 72 temporarily ends the series of processes illustrated in FIG. 11A. Incidentally, when executing the process of S124, the CPU 102 overwrites the mirror mapping data 106d with the evaluation mapping data 76b. Then, in such a case, when mapping data to be newly evaluated is generated, the same process as the process illustrated in FIG. 11B may be executed. When an affirmative determination is made in the process of S122, the evaluation mapping data 76b is not only transmitted to the vehicles VC1, VC2, ... , that have already been shipped and are on the market, but also implemented on a newly shipped vehicle. Here, the newly shipped vehicle is not limited to a vehicle equipped with an internal combustion engine having the same specification as the internal combustion engine 10, and may be a vehicle having the same number of cylinders as the internal combustion engine 10. However, when the specifications are different, it is desirable to further set a condition that the difference between the displacement of the internal combustion engine 10 and the displacement of the internal combustion engine of the newly shipped vehicle is equal to or less than a predetermined amount.

### Fourth Embodiment

Hereinafter, a fourth embodiment will be described with reference to the drawings, focusing on differences from the third embodiment.

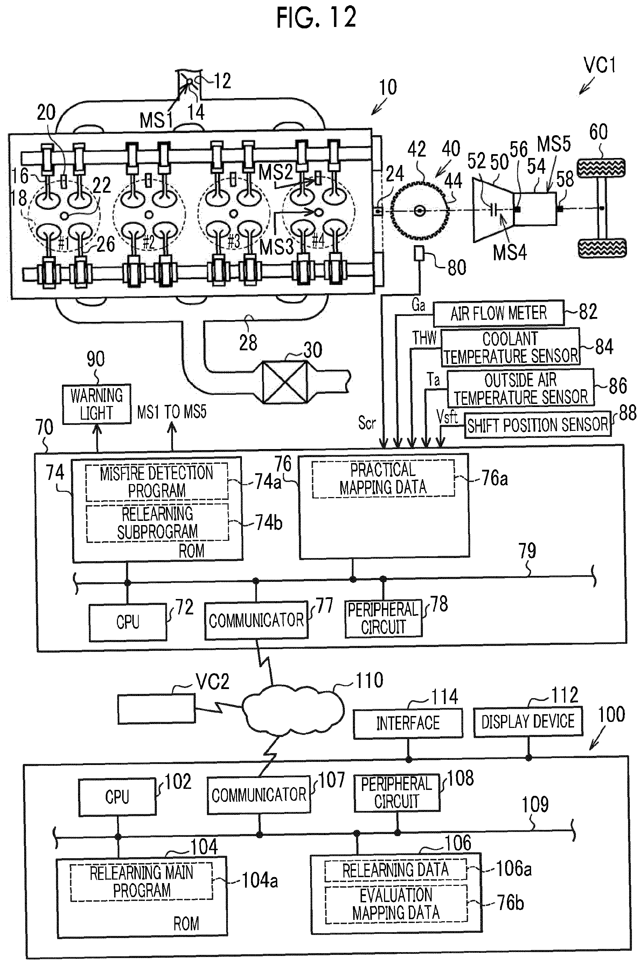

FIG. 12 is a diagram illustrating a configuration of a learning control system according to a fourth embodiment. In FIG. 12, members corresponding to the members illustrated in FIG. 1 above are denoted by the same reference numerals for convenience.

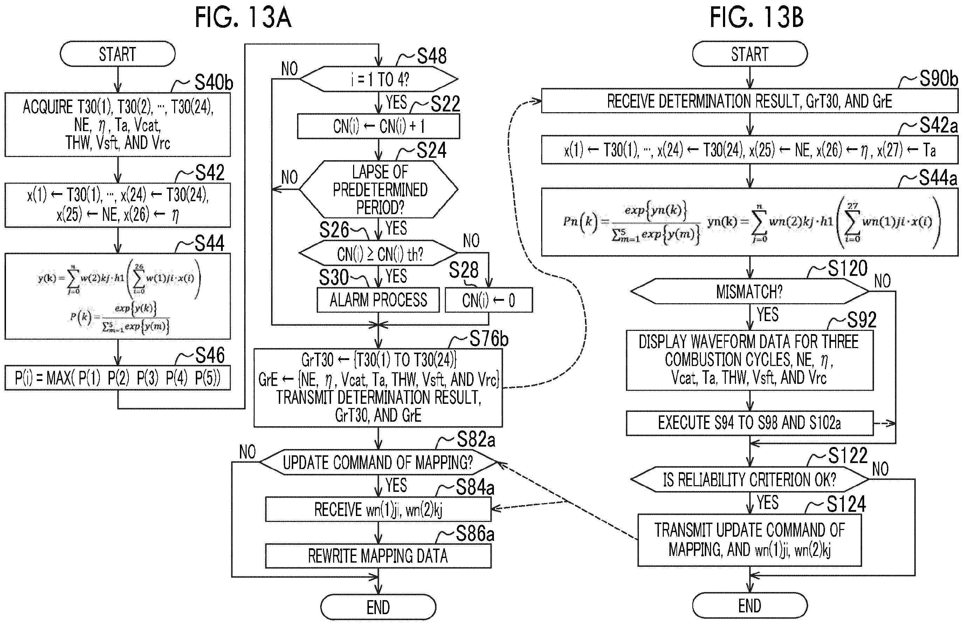

As illustrated in FIG. 12, in the present embodiment, the mirror mapping data 106d is not stored in the storage device 106. FIGS. 13A and 13B illustrate procedures of processes related to relearning of the evaluation mapping data 76b according to the present embodiment. The process illustrated in FIG. 13A is realized by the CPU 72 executing the relearning subprogram 74b stored in the ROM 74 illustrated in FIG. 12. The process illustrated in FIG. 13B is realized by the CPU 102 executing the relearning main program 104a stored in the ROM 104. In FIGS. 13A and 13B, the processes corresponding to the processes illustrated in FIGS. 11A and 11B are denoted by the same step numbers for convenience. Hereinafter, the processes illustrated in FIGS. 13A and 13B will be described along the time series of processes related to relearning.

As illustrated in FIG. 13A, the CPU 72 first executes the processes of S40b, S42 to S48, S22 to S30, similarly to the process of FIG. 11A. Then, when the process of S28 or S30 is completed, or when a negative determination is made in the process of S24 or S48, the CPU 72 transmits the information on the misfire variable P(i) specified as the largest one by the process of S46 as a determination result in addition to the rotation time set GrT30 and the extra information set GrE (S76b), and proceeds to the process of S82a.

On the other hand, as illustrated in FIG. 13B, the CPU 102 receives the data transmitted by the process of S76b (S90b), and executes the processes of S42a and S44a. Then, the CPU 102 determines whether or not there is a mismatch between the largest one among the misfire variables Pn(1) to Pn(5) calculated by the process of S44a and the determination result received together with the minute rotation times T30(25) to T30(48) in the process of S90b (S120). Then, when determination is made that there is a mismatch (S120: YES), the CPU 102 executes the processes of S92 to S98, S102a, S122, and S124, similarly to the processes of FIG. 11B.

It is assumed that the processes of S42a and S44a are executed using the data acquired by the process of S90b in the previous control cycle of FIG. 13B, and the process of S120 is determination as to a match or mismatch between the determination result acquired by the process of S90b in the previous control cycle and the determination result acquired by the process of S44a in the current control cycle.

### Fifth Embodiment

Hereinafter, a fifth embodiment will be described with reference to the drawings, focusing on differences from the fourth embodiment.

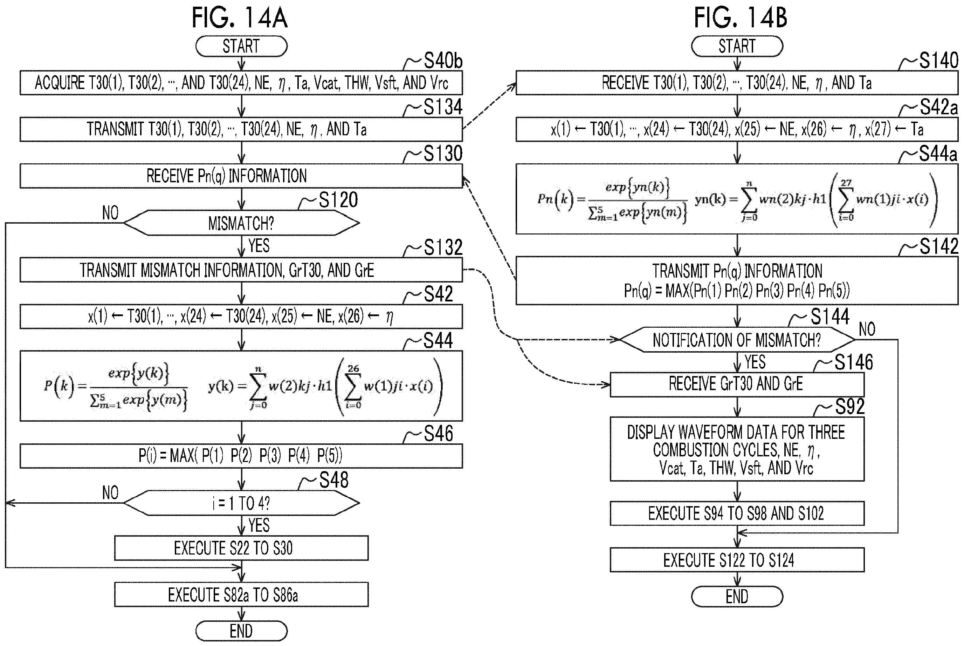

FIGS. 14A and 14B illustrate procedures of processes related to relearning of the evaluation mapping data 76b according to the present embodiment. The process illustrated in FIG. 14A is realized by the CPU 72 executing the relearning subprogram 74b stored in the ROM 74 illustrated in FIG. 12. The process illustrated in FIG. 14B is realized by the CPU 102 executing the relearning main program 104a stored in the ROM 104. In FIGS. 14A and 14B, the processes corresponding to the processes illustrated in FIGS. 13A and 13B are denoted by the same step numbers for convenience. Hereinafter, the processes illustrated in FIGS. 14A and 14B will be described along the time series of processes related to relearning.

In the series of processes illustrated in FIG. 14A, the CPU 72 first executes the same process as the process S40b. Thereafter, the CPU 72 operates the communicator 77 to transmit the minute rotation times T30(1) to T30(24), the rotation speed NE, the charging efficiency η, and the outside air temperature Ta, which are some of the data acquired by the process of S40b, to the data analysis center 100 (S134), and executes the processes of S42 to S48, S22 to S30, and S82a to S86a.

On the other hand, as illustrated in FIG. 14B, the CPU 102 receives the data transmitted by the process of S134 (S140), and executes the processes of S42a and S44a. Then, the CPU 102 operates the communicator 107 to transmit information on the misfire variable Pn(q) that is largest one among the misfire variables Pn(1) to Pn(5) calculated by the process of S44a (S142).

On the other hand, as illustrated in FIG. 14A, the CPU 72 receives the information on the misfire variable Pn(q) acquired by the process of S142 corresponding to the process of S134 in the previous control cycle of the series of processes of FIG. 14A (S130). Then, the CPU 72 determines whether or not there is a mismatch between the result of the process of S46 in the previous control cycle of the series of processes in FIG. 14A and the determination result received in the process of S130 in the current control cycle (S120). Then, when determination is made that there is a mismatch (S120: YES), the CPU 72 operates the communicator 77 to transmit information indicating that there is the mismatch, the rotation time set GrT30, and the extra information set GrE (S132). Here, the rotation time set GrT30 is assumed to be the minute rotation times T30(1) to T30(24) acquired by the process of S40b in the current control cycle. On the other hand, the extra information set GrE is assumed to be data acquired by the process of S40b in the previous control cycle.

On the other hand, as illustrated in FIG. 14B, when the CPU 102 receives the notification of the mismatch from the vehicle VC1 (S144: YES), the CPU 102 receives the rotation time set GrT30 and the extra information set GrE (S146), and executes the processes of S92 to S98, S102, S122, and S124. When determination is made in the process of S144 that there is the mismatch, the rotation time set GrT30 received by the process of S146 is a minute rotation time T30 for one combustion cycle following the minute rotation time T30 for one combustion cycle used when the determination is made that there is the mismatch. Then, the minute rotation times T30 for three combustion cycles including the minute rotation time T30 for the next one combustion cycle are displayed as waveform data indicating the rotation behavior of the crankshaft 24 by the process of S92.

### Sixth Embodiment

Hereinafter, a sixth embodiment will be described with reference to the drawings, focusing on differences from the third embodiment.

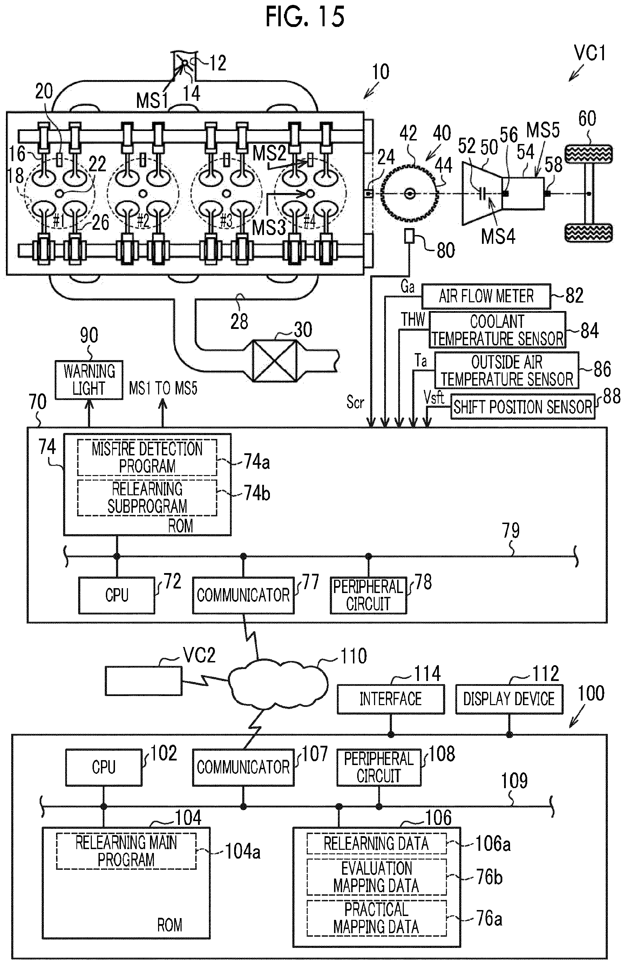

FIG. 15 is a diagram illustrating a configuration of a learning control system according to a sixth embodiment. In FIG. 15, members corresponding to the members illustrated in FIG. 1 above are denoted by the same reference numerals for convenience.

As illustrated in FIG. 15, in the present embodiment, not only the evaluation mapping data 76b but also the practical mapping data 76a is not stored in the storage device 76. On the other hand, not only the evaluation mapping data 76b but also the practical mapping data 76a is stored in the storage device 106.

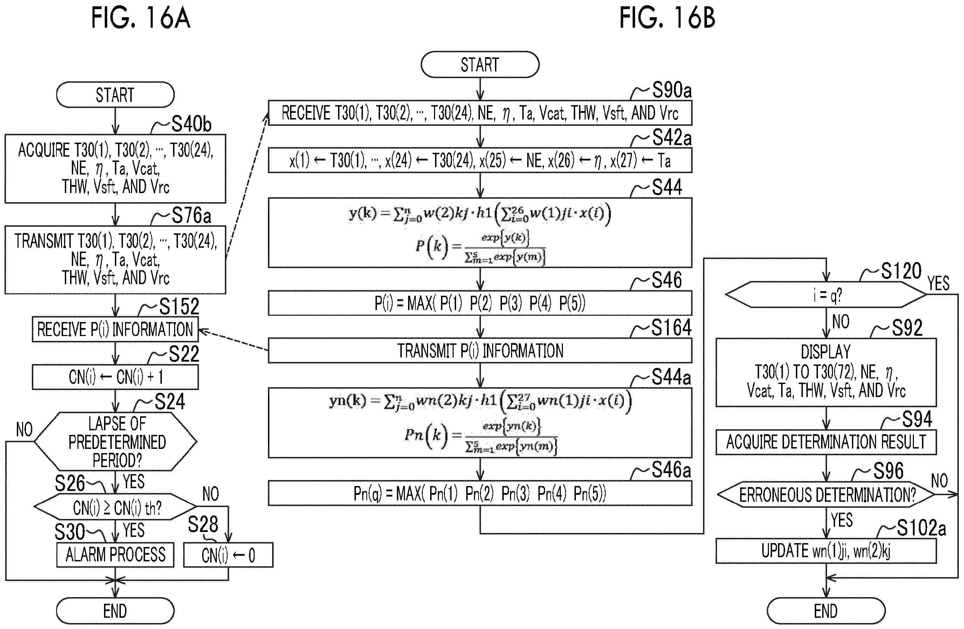

FIG. 16A illustrates a procedure of a process related to relearning of the evaluation mapping data 76b according to the present embodiment. The process illustrated in FIG. 16A is realized by the CPU 72 executing the relearning subprogram 74b stored in the ROM 74 illustrated in FIG. 15. The process illustrated in FIG. 16B is realized by the CPU 102 executing the relearning main program 104a stored in the ROM 104. In FIGS. 16A and 16B, the processes corresponding to the processes illustrated in FIGS. 13A and 13B are denoted by the same step numbers for convenience. Hereinafter, the processes illustrated in FIGS. 16A and 16B will be described along the time series of processes related to relearning.

In the series of processes illustrated in FIG. 16A, the CPU 72 executes the same process as S40b in FIG. 13A, and then executes the same process as S76a in FIG. 11A. On the other hand, as illustrated in FIG. 16B, the CPU 102 receives the data transmitted by the process of S76a (S90a). Then, the CPU 102 executes the processes of S42a, S44, and S46 based on the data received by the process of S90a in the previous control cycle of the series of processes illustrated in FIG. 16B, and transmits information on the misfire variable P(i) having the largest value among the misfire variables P(1) to P(5) (S164).

On the other hand, as illustrated in FIG. 16A, the CPU 72 receives the information on the misfire variable P(i) having the largest value (S152), and executes the processes of S22 to S30. Meanwhile, as illustrated in FIG. 16B, the CPU 102 executes the processes of S44a and S46a based on the process of S42a, and determines whether or not the determination result using the practical mapping data 76a matches the determination result using the evaluation mapping data 76b (S120). Then, when determination is made that there is a mismatch (S120: NO), the CPU 102 executes the processes of S92 to S96 and S102a to temporarily end the series of processes illustrated in FIG. 16B, while determination is made that there is a match (S120: YES), the CPU 102 temporarily ends the series of processes illustrated in FIG. 16B. In the process of S92, waveform data indicating the rotation behavior of the crankshaft 24 is visually displayed based on the minute rotation times T30 for three combustion cycles in total of the minute rotation time T30 for one combustion cycle when determination is made that there is a mismatch and the minute rotation time T30 for one combustion cycle before and after the combustion cycle.

### Seventh Embodiment

Hereinafter, a seventh embodiment will be described with reference to the drawings, focusing on differences from the first embodiment.

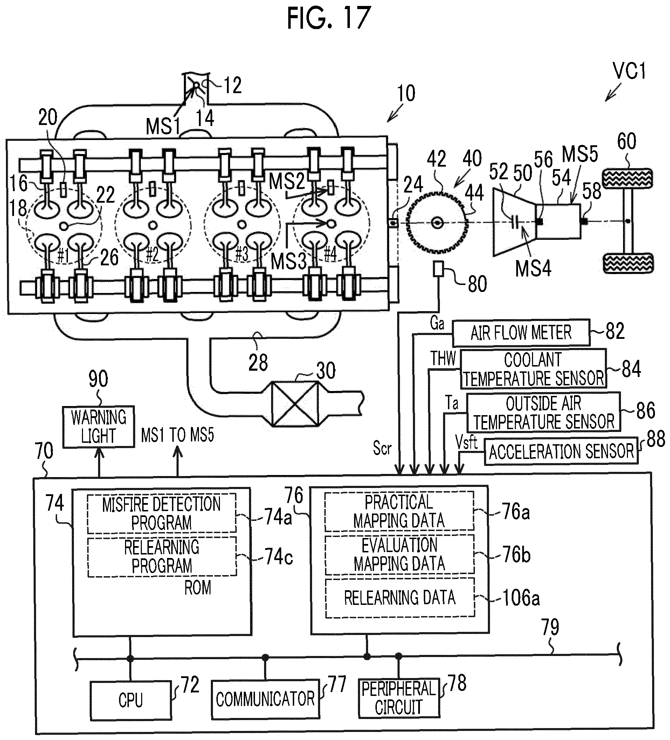

In the present embodiment, relearning of the evaluation mapping data 76b is executed in the control device 70. FIG. 17 illustrates the control device 70 according to the present embodiment. As illustrated in FIG. 17, the ROM 74 stores a relearning program 74c. The storage device 76 stores the relearning data 106a in addition to the practical mapping data 76a and the evaluation mapping data 76b.

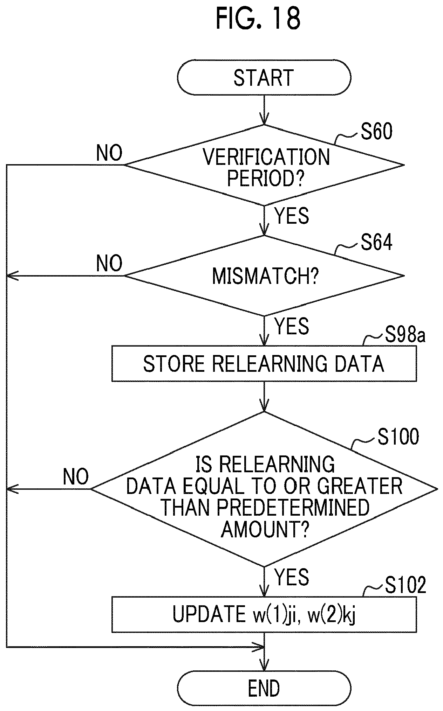

FIG. 18 illustrates a procedure of a process executed by the control device 70. The process illustrated in FIG. 18 is realized by the CPU 72 repeatedly executing the relearning program 74c stored in the ROM 74 at a predetermined cycle, for example. In the process of FIG. 18, the processes corresponding to the processes illustrated in FIGS. 4A and 4B are denoted by the same step numbers for convenience.

In the series of processes illustrated in FIG. 18, the CPU 72 first executes the process of S60, and when determination is made that the evaluation period is a verification period (S60: YES), the CPU 72 executes the process of S64. Then, when determination is made that there is a mismatch (S64: YES), the CPU 72 stores, in the storage device 76 as relearning data, the input data of the mapping defined by the evaluation mapping data 76b used when determined as the mismatch and the determination result in the process of FIG. 2 (S98a). Then, the CPU 72 executes the processes of S100 and S102. At this time, the CPU 72 generates teacher data by regarding the determination result in the process of FIG. 2 as correct.

When the process of S102 is completed, or when a negative determination is made in the process of S60, S64, or S100, the CPU 72 temporarily ends the series of processes illustrated in FIG. 18. According to the present embodiment described above, even when the training data cannot be sufficiently secured before the evaluation mapping data 76b is stored in the control device 70, or there is not enough learning opportunity, it is possible to make the misfire detection accuracy based on the evaluation mapping data 76b close to the misfire detection accuracy of the practical mapping data 76c.

### Correspondence

The correspondence between the matters in the above embodiments and the matters described in the "SUMMARY OF THE INVENTION" section is as follows.

The execution device can be regarded as the CPU 72 and the ROM 74, and the storage device can be regarded as the storage device 76. The in-vehicle sensor can be regarded as the crank angle sensor 80 and the air flow meter 82. The first mapping data can be regarded as the practical mapping data 76a. The second mapping data can be regarded as the evaluation mapping data 76b. The first acquisition process can be regarded as the process of S10 in FIG. 2 and the process of S40 in FIG. 7. The first calculation process can be regarded as the processes of S16 and S18 in FIG. 2 and the processes of S42 to S46 in FIG. 7. The second acquisition process can be regarded as the process of S40 in FIG. 3 and the process of S40a in FIG. 8. The second calculation process can be regarded as the processes of S42 and S44 in FIG. 3 and the processes of S42a and S44a in FIG. 8. The coping process can be regarded as the process of S30, and the predetermined hardware can be regarded as the warning light 90. The determination process can be regarded as the processes of S64 and S70.

The relearning data generation process can be regarded as the process of S76 in FIGS. 4A and 9A and the process of S98a in FIG. 18. The relearning process can be regarded as the process of S102 in FIG. 18.

The execution device can be regarded as the CPUs 72, 102 and the ROMs 74, 104, and a storage device corresponds to the storage devices 76, 106. The display process can be regarded as the process of S92, the validity determination result import process can be regarded as the process of S94, and the process of generating data can be regarded as the process of S98.

The execution device can be regarded as the CPUs 72, 102 and the ROMs 74, 104, and a storage device corresponds to the storage devices 76, 106. The third mapping data can be regarded as the high-specification mapping data 106b.

The first execution device can be regarded as the CPU 72 and the ROM 74 in FIGS. 1 and 6, and the second execution device can be regarded as the CPU 102 and the ROM 104 in FIGS. 1 and 6. The relearning data transmission process can be regarded as the process of S80, the relearning data reception process can be regarded as the process of S90, and the relearning process can be regarded as the processes of S102 and S102a in FIGS. 4B and 9B.

The parameter transmission process can be regarded as the processes of S104 and S104a in FIGS. 4B and 9B, and the parameter reception process can be regarded as the processes of S84 and S84a in FIGS. 4A and 9A.

"The first execution device is configured to execute the input data transmission process when travel of the vehicle ends" can be regarded as the execution of the process of S80 when an affirmative determination is made in the process of S78.

The first execution device can be regarded as the CPU 72 and the ROM 74 in FIG. 10, and the second execution device can be regarded as the CPU 102 and the ROM 104 in FIG. 10. The first storage device can be regarded as the storage device 76 in FIG. 10, and the second storage device can be regarded as the storage device 106 in FIG. 10. The practical mapping data can be regarded as the practical mapping data 76a, and the comparison mapping data can be regarded as the mirror mapping data 106d. The input data transmission process can be regarded as the process of S76a of FIG. 11A. The input data reception process can be regarded as the process of S90a in FIG. 11B. The practical acquisition process and the comparison acquisition process as the first acquisition process can be regarded as the process of S40b in FIG. 11A.

The first execution device can be regarded as the CPU 72 and the ROM 74 in FIG. 12, and the second execution device can be regarded as the CPU 102 and the ROM 104 in FIG. 12. The first calculation result transmission process can be regarded as the process of transmitting the determination result in S76b of FIG. 13A, and the first calculation result reception process can be regarded as the process of receiving the determination result in S90b of FIG. 13B. The second calculation result reception process can be regarded as the process of S130 in FIG. 14A, and the second calculation result transmission process can be regarded as the process of S142 in FIG. 14B.

The first execution device can be regarded as the CPU 72 and the ROM 74 in FIG. 15, and the second execution device can be regarded as the CPU 102 and the ROM 104 in FIG. 15.

### Other Embodiments

The present embodiment can be modified and implemented as follows. The present embodiment and the following modification examples can be implemented in combination with each other within a technically consistent range.

### Regarding Default State of Vehicle

The default state of the vehicle in which the information is included in the output of the mapping is not limited to the examples described in the above embodiments. For example, the state of the internal combustion engine may be as follows.

### (a) State related to Imbalance

Here, the imbalance is a variation between actual air-fuel ratios when the fuel injection valve is operated to control air-fuel ratios of air-fuel mixtures in the respective cylinders to be equal to each other. In this case, the practical mapping data 76a as the first mapping data may include data defining a mapping that outputs a value when the imbalance variable, which is a variable indicating the degree of an imbalance, indicates a value on the rich side, based on the amount of change per predetermined time in the detection value of the air-fuel ratio sensor upstream of the catalyst 30, for example. The practical mapping data 76a may include data defining a mapping that outputs a value when the imbalance variable indicates a value on the lean side based on the fluctuation of the minute rotation time T30. The evaluation mapping data 76b as the second mapping data may be data defining a neural network that outputs a value of the imbalance variable by inputting time-series data including the minute rotation times T30(1) to T30(24) and time-series data of the detection value of the air-fuel ratio sensor upstream of the catalyst 30 during that period. Instead of this, a mapping using, as an input, the time-series data including the minute rotation times T30(1) to T30(24) and the time-series data of the detection value of the air-fuel ratio sensor upstream of the catalyst 30 during that period may be set as the first mapping, and a mapping with further increased inputs may be set as the second mapping.

### (b) Degree of Deterioration of Catalyst 30

In this case, in order to calculate a value of a deterioration variable that is a variable indicating the degree of deterioration of the catalyst 30 using the first mapping, active control may be used such that oxygen is excessively present in the exhaust gas flowing into the catalyst 30, at the timing when the detection value of the air-fuel ratio sensor downstream of the catalyst 30 is inverted from lean to rich. Then, the practical mapping data 76a as the first mapping data may be data defining a mapping that outputs the value of the deterioration variable based on the amount of oxygen flowing into the catalyst 30 until the detection value of the air-fuel ratio sensor downstream of the catalyst 30 is inverted from rich to lean by the active control. The evaluation mapping data 76b defining the second mapping data may be data defining a neural network that outputs the value of the deterioration variable, for example, by inputting the time-series data of the detection value of the air-fuel ratio sensor upstream of the catalyst 30, the time-series data of the detection value of the air-fuel ratio sensor downstream of the catalyst 30, the rotation speed NE, the charging efficiency η, and the temperature of the catalyst 30. In such a case, the process of calculating the value of the deterioration variable by the second mapping may be performed when the active control is not being executed. Thereby, the learning of the second mapping for determining the presence or absence of deterioration can be advanced without executing the active control, and the accuracy can be improved. For example, when the first mapping is a neural network that outputs the value of the deterioration variable by inputting the time-series data of the detection value of the air-fuel ratio sensor upstream of the catalyst 30, the time-series data of the detection value of the air-fuel ratio sensor downstream of the catalyst 30, the rotation speed NE, the charging efficiency η, and the temperature of the catalyst 30, the second mapping may be a neural network with more input dimensions than the first mapping.

### (c) Amount of PM Collected by Filter

Here, it is assumed that the catalyst 30 is provided with a filter that collects particulate matter (PM). In this case, the practical mapping data 76a as the first mapping data may include, for example, map data that determines a relationship between the operating point variable of the internal combustion engine 10 and the base value of the PM amount, map data that determines a relationship between the ignition timing and the correction amount of the PM amount, and map data that determines a relationship between the temperature of the coolant of the internal combustion engine 10 and the correction amount of the PM amount. The evaluation mapping data 76b as the second mapping data may be data defining a neural network using, as an input, the operating point variable, the ignition timing, the coolant temperature, and the like. For example, when the first mapping is a neural network using, as an input, the operating point variable, the ignition timing, and the coolant temperature, the second mapping may be a neural network with more input dimensions than the first mapping.

### (d) Temperature of Catalyst 30

In this case, the practical mapping data 76a as the first mapping data may be data defining a first-order lag filter or a second-order lag filter using, as an input, the detection value of the exhaust temperature upstream of the catalyst 30. The evaluation mapping data 76b defining the second mapping data may be data defining a neural network using, as an input, the time-series data of each of the detection value of the exhaust temperature, the operating point variable, and the detection value of the air-fuel ratio sensor upstream of the catalyst 30, and a previous value of the temperature of the catalyst 30. For example, when the first mapping is a neural network using, as an input, the time-series data of each of the detection value of the exhaust temperature, the operating point variable, and the detection value of the air-fuel ratio sensor upstream of the catalyst 30, and the previous value of the temperature of the catalyst 30, the second mapping may be a neural network with more input dimensions than the first mapping. (e) State related to Deterioration of Responsiveness of Air-Fuel Ratio Sensor

In this case, in the deterioration determination process using the practical mapping data 76a as the first mapping data, active control that deviates from the normal air-fuel ratio feedback control and largely changes the air-fuel ratio alternately between lean and rich may be used. Then, the practical mapping data 76a may be data for calculating the value of a deterioration variable that is a variable indicating the degree of deterioration based on the time needed for the detection value (upstream air-fuel ratio Afu) of the air-fuel ratio sensor upstream of the catalyst 30 to be inverted from rich to lean or from lean to rich by the active control. The evaluation mapping data 76b as the second mapping data may be data defining a neural network that outputs the value of the deterioration variable by inputting time-series data of an injection amount and time-series data of the upstream air-fuel ratio Afu. In such a case, the process of calculating the value of the deterioration variable by the second mapping may be performed when the active control is not being executed.

### (f) State related to Oxygen Storage Amount of Catalyst

In this case, the practical mapping data 76a as the first mapping data may be map data using, as an input variable, a difference between an average value of the upstream air-fuel ratio Afu and an average value of the detection value (downstream air-fuel ratio Afd) of the air-fuel ratio sensor downstream of the catalyst 30, and using, as an output variable, a value of a storage amount variable that is a variable indicating the oxygen storage amount. The evaluation mapping data 76b as the second mapping data may be data defining a neural network that outputs the value of the storage amount variable by inputting an integrated value of an excess or deficiency amount of the actual amount of fuel with respect to the amount of fuel that reacts with oxygen without excess or deficiency and the temperature of the catalyst during a predetermined period, and a previous value of the storage amount variable.

### (g) State related to Presence or Absence of Knocking of Internal Combustion Engine

In this case, the practical mapping data 76a as the first mapping data may be data defining a mapping that outputs a logical value indicating whether or not there is knocking based on a magnitude comparison between an integrated value of the detection values of the knocking sensor and a determination value. The evaluation mapping data 76b as the second mapping data may be data defining a neural network that outputs a peak value of the pressure in the combustion chamber 18 by inputting time-series data of the detection values of the knocking sensor. In such a case, determination may be made that knocking has occurred when the peak value is equal to or greater than a threshold.

### (h) State related to Temperature of Fuel Supplied to Fuel Injection Valve 20

In this case, the practical mapping data 76a as the first mapping data may be map data using the rotation speed NE, the charging efficiency η, and the coolant temperature THW as an input variable and a temperature of fuel as an output variable. The evaluation mapping data 76b as the second mapping data may be data defining a neural network that outputs the temperature of fuel by inputting the rotation speed NE, the charging efficiency η, the injection amount of fuel by the fuel injection valve 20, an intake air temperature, a vehicle speed V, and a previous value of the temperature of fuel.

### (i) Presence or Absence of Abnormality of Purge System

In this case, in a purge system including a canister that collects fuel vapor in the fuel tank and a purge valve that adjusts a flow passage cross-sectional area of a purge path between the canister and the intake passage, a mapping that is determined to be abnormal when there is a hole in the purge path can be considered. In this case, the practical mapping data 76a as the first mapping data may be data defining a mapping that outputs a logical value indicating that there is an abnormality when the rate of increase in pressure when the purge valve is closed is equal to or higher than a threshold after the purge valve is opened and the pressure in the canister is reduced. The evaluation mapping data 76b as the second mapping data may be data defining a neural network that outputs an output value according to the presence or absence of a hole by inputting time-series data of the pressure in the canister and an atmospheric pressure.

### (i) EGR Rate

Here, it is assumed that an EGR passage that connects the exhaust passage 28 and the intake passage 12 of the internal combustion engine 10 and an EGR valve that adjusts a flow passage cross-sectional area of the EGR passage are provided. The EGR rate is a ratio of the flow rate of the fluid flowing from the EGR passage to the intake passage 12 to the flow rate of the fluid flowing from the intake passage 12 to the combustion chamber 18. In this case, the practical mapping data 76a as the first mapping data may be map data using the rotation speed NE and the charging efficiency η an input variable and the EGR rate as an output variable. The evaluation mapping data 76b as the second mapping data may be data defining a neural network that outputs the EGR rate by using, as an input variable, the rotation speed NE, the charging efficiency η, the pressure in the intake passage 12, and the intake air amount Ga.

### (k) State related to Presence or Absence of Leakage in Blow-By Gas Delivery Path

Here, it is assumed that a blow-by gas delivery path that connects a crankcase of the internal combustion engine and the intake passage is provided. In this case, a pressure sensor is provided in the blow-by gas delivery path, the practical mapping data 76a as the first mapping data may be data that outputs a value indicating the presence or absence of an abnormality based on a magnitude comparison between the pressure detected by the pressure sensor and a determination value based on the rotation speed NE and the charging efficiency η. The evaluation mapping data 76b as the second mapping data may be data defining a neural network that outputs the value indicating the presence or absence of an abnormality by using, as an input variable, the rotation speed NE, the charging efficiency η, and a difference between the intake air amount Ga and an intake air amount passing through the throttle valve 14.

Note that, the default state of the vehicle is not limited to the state of the internal combustion engine. For example, as described in the "Regarding Vehicle" section below, in a vehicle including a rotating electric machine, the state of a battery that stores electric power supplied to the rotating electric machine may be used.

### Regarding Determination Process

The verification period of the process in S60 is not limited to the examples described in the above embodiments. In the processes of FIGS. 4A, 4B, 9A, 9B, and 18, just during the verification period, a match or mismatch between the misfire determination result based on the practical mapping data 76a and the misfire determination result based on the evaluation mapping data 76b has been determined. However, the embodiments according to the invention are not limited thereto, for example, the processes may be performed all the time.

In the above embodiments, determination has been made whether or not there is a match between the misfire determination results based on the detection values of the sensors acquired at the same time. However, depending on the selection of the mapping data, it is not indispensable to determine a consistency between the output of the first mapping and the output of the second mapping using, as an input, data based on the detection values of the sensors acquired at the same time. For example, as described in the "Regarding Default state of vehicle" section, when the mapping outputs the value of the deterioration variable of the catalyst 30 or the air-fuel ratio sensor, and it is assumed that active control is performed solely for the first mapping, the presence or absence of the consistency may be determined based on the values calculated within the same trip.

As described in the "Regarding Default state of vehicle" section, in the case of a mapping or the like that outputs the value of the deterioration variable of the catalyst 30 or the air-fuel ratio sensor, when the absolute value of the difference between the output value of the first mapping and the output value of the second mapping is equal to or greater than a predetermined value, determination may be made that the output values are not consistent with each other.

### Regarding Relearned Parameters

In FIGS. 4A, 4B, 9A, and 9B, the relearned parameters, which are updated parameters, have been transmitted to each of the vehicles VC1, VC2, ... , via the network 110, but the embodiments according to the invention are not limited thereto. For example, the data may be transmitted to a vehicle dealership and the data in the storage device 76 may be updated when each of the vehicles VC1, VC2, ... has entered the dealership. Even in such a case, it is possible to further evaluate and update the reliability of the evaluation mapping data 76b updated by the relearned parameters.

However, it is not indispensable to provide the vehicle that provided the data used for the relearning with the relearned parameters. The evaluation mapping data 76b may be updated using the relearned parameters, and the updated evaluation mapping data 76b may simply be implemented on a newly developed vehicle. In such a case, it is desirable that the difference between the displacement of the internal combustion engine mounted on the newly developed vehicle and the displacement of the internal combustion engine mounted on the vehicle that has transmitted the data for relearning is equal to or less than a predetermined amount. As in the above embodiments, when the evaluation mapping data is data that outputs a misfire variable corresponding to the probability that a misfire has occurred in each cylinder, it is desirable that the number of cylinders of the internal combustion engine mounted on the newly developed vehicle is the same as the number of cylinders of the internal combustion engine mounted on the vehicle that has transmitted the data for relearning.

Further, in the processes of FIGS. 4A, 4B, 9A, and 9B, after the evaluation mapping data 76b has been updated using the relearned parameters, the practical mapping data 76a may be overwritten with the updated data. In the processes of FIGS. 11A, 11B, 13A, 13B, 14A, and 14B, the process of S124 may not be executed, and the evaluation mapping data 76b for which an affirmative determination is made in the process of S122 may be implemented as the practical mapping data 76a on a newly shipped vehicle.

### Regarding Display Device

In the above embodiments, the display device 112 has been disposed in the data analysis center 100. However, the embodiments according to the invention are not limited thereto, and the display device 112 may be disposed in a site different from the site where the storage device 106 and the like are disposed.

### Regarding Relearning Data Generation Process

In FIGS. 4A, 4B, 11A, 11B, 13A, 13B, 14A, 14B, 16A, and 16B, by displaying, on the display device 112, the input data used for the calculation of the misfire variables P(j), Pn(j) calculated using the evaluation mapping data 76b and the related data, a skilled person has evaluated whether or not an erroneous determination has been made. However, the embodiments according to the invention are not limited thereto. For example, the evaluation may be performed automatically using the high-specification mapping data 106b. Note that, when the misfire variables P(j), Pn(j) calculated using the evaluation mapping data 76b are evaluated, it is not indispensable that the evaluation is made in further consideration of data other than the input data used for calculating the misfire variables P(j), Pn(j).

In FIGS. 9A and 9B, based on the input data used for the calculation of the misfire variable Pn(j) calculated using the evaluation mapping data 76b and the related data, whether or not an erroneous determination is made is automatically evaluated using the high-specification mapping data 106b. However, the embodiments according to the invention are not limited thereto, for example, a skilled person may evaluate whether or not an erroneous determination is made.

In the processes of FIGS. 4A and 4B, for convenience of description, the process of S92 has been executed each time the process of S80 is executed. However, the embodiments according to the invention are not limited thereto. For example, the process of S92 may be executed when a predetermined amount of data determined as a mismatch is accumulated. For example, data determined as a mismatch may be accumulated each time, and the process of S92 may be executed in response to a request from a skilled person.

In FIGS. 11A, 11B, 13A, 13B, 14A, 14B, 16A, and 16B, for convenience of description, the process of S92 has been executed each time a mismatch between the evaluation result using the evaluation mapping data 76b and the evaluation result using the practical mapping data 96a is determined. However, the embodiments according to the invention are not limited thereto. For example, the process of S92 may be executed when a predetermined amount of data determined as a mismatch is accumulated. For example, data determined as a mismatch may be accumulated each time, and the process of S92 may be executed in response to a request from a skilled person. Further, the waveform data indicating the rotation behavior of the crankshaft 24 displayed in the process of S92 may include data used when determined as a mismatch, and data at the time of transition from a mismatch to a match, similarly to the processes of FIGS. 4A and 4B. For example, the waveform data indicating the rotation behavior of the crankshaft 24 displayed in the process of S92 may be data for a period of four or more combustion cycles.

In the above embodiments, the validity of the determination result of the mapping defined by the evaluation mapping data 76b has been determined using a subject having higher accuracy than the mapping defined by the evaluation mapping data 76b or the practical mapping data 76a. However, the embodiments according to the invention are not limited thereto. For example, the validity of the determination result of the mapping defined by the evaluation mapping data 76b may be determined by a majority decision between the determination result of the mapping defined by the evaluation mapping data 76b and the determination results using two or more other mappings. Furthermore, one of the determination results using the two or more other mappings may be used for determination by a skilled person instead of the determination result of the mapping defined by the evaluation mapping data 76b.

### Regarding Comparison Mapping Data

In FIG. 10, the mirror mapping data 106d, which is the same as the practical mapping data 76a, is illustrated as comparison data, but the embodiments according to the invention are not limited thereto. For example, the high-specification mapping data 106b may be used as the comparison data. In such a case, when determination is made in the process of S120 that there is the mismatch, the determination may be regarded as the erroneous determination in the process of S96. Note that, the comparison data is not limited to the same data as the practical mapping data 76a, or a mapping such as the high-specification mapping data 106b that can be determined with the same high accuracy as a skilled person.

### Regarding First Mapping and First Mapping Data

In FIG. 1, the data for executing the processes of S16 and S18 is illustrated as the practical mapping data 76a, but the embodiments according to the invention are not limited thereto.

In FIGS. 6, 10, 12, and 15, the neural network having a single intermediate layer is illustrated as the practical mapping data 76a, but the embodiments according to the invention are not limited thereto. For example, a neural network having two or more intermediate layers may be used as the practical mapping data 76a. The activation function h1 is not limited to the hyperbolic tangent, and may be a logistic sigmoid function or a ReLU. Note that, the ReLU is a function that outputs the greater of the input and "0", or "0" when the input is "0". The number of nodes in the output layer of the neural network, that is, the dimension is not limited to "(number of cylinders) + 1". For example, the number may be equal to the number of cylinders, and determination may be made that a misfire has occurred when any of the output values is greater than a threshold. For example, based on one output of the neural network, the number of cylinders to be determined as to whether or not a misfire has occurred may be one, and the number of nodes in the output layer may be one. In such a case, it is desirable that the range of possible output values of the output layer is standardized by a logistic sigmoid function or the like.

The practical mapping data is not limited to data defining a neural network. For example, an identification function that outputs values having different reference numerals depending on the presence or absence of a misfire in one cylinder to be determined as a misfire may be used. The identification function may include, for example, a support vector machine.

### Regarding Second Mapping Data

The evaluation mapping data 76b as the second mapping data is not limited to data defining a neural network having a single intermediate layer. For example, the second mapping data may be data defining a neural network having two or more intermediate layers. The activation function h1 is not limited to the hyperbolic tangent, and may be a logistic sigmoid function or a ReLU. The number of nodes in the output layer of the neural network, that is, the dimension is not limited to "(number of cylinders) + 1". For example, the number may be equal to the number of cylinders, and determination may be made that a misfire has occurred when any of the output values is greater than a threshold. For example, based on one output of the neural network, the number of cylinders to be determined as to whether or not a misfire has occurred may be one, and the number of nodes in the output layer may be one. In such a case, it is desirable that the range of possible output values of the output layer is standardized by a logistic sigmoid function or the like.

It is also not indispensable that the number of dimensions of the input of the second mapping is larger than the number of dimensions of the input of the first mapping. For example, the number of dimensions of the input may be the same, and the number of intermediate layers may be larger than the number of layers of the first mapping. For example, the number of dimensions of the input and the number of intermediate layers may be the same as those of the first mapping, and the activation functions may be different from each other.

The second mapping is not limited to the neural network. For example, an identification function that outputs values having different reference numerals depending on the presence or absence of a misfire in one cylinder to be determined as a misfire may be used. The identification function may include, for example, a support vector machine.

### Regarding Third Mapping and Third Mapping Data

In the above embodiments, as the third mapping data, the high-specification mapping data 106b having a larger dimension than the input of the mapping defined by the evaluation mapping data 76b and having a large number of intermediate layers has been exemplified. However, the embodiments according to the invention are not limited thereto. For example, the number of dimensions may be the same, and the number of intermediate layers may be large. This can be realized, for example, by setting the number of intermediate layers to be two or more while making the input variables the same as those exemplified in S42a. For example, although the number of dimensions is large, the number of intermediate layers may be the same.

In the above embodiments, as the third mapping data, the learned model (the high-specification mapping data 106b) in which data transmitted from the vehicles VC1, VC2, ... , equipped with the internal combustion engine 10 having one specification is used as training data has been exemplified. However, the embodiments according to the invention are not limited to thereto. For example, data transmitted from vehicles equipped with various internal combustion engines having different numbers of cylinders, displacements, and the like may be used as training data. However, in such a case, it is desirable to use specification information such as the number of cylinders and the displacement as input variables of the third mapping. Note that, the input variables of the third mapping are not limited thereto, and may include, for example, variables that are not used by a skilled person in making determination. It is also not indispensable to use the determination result of the skilled person as at least some of the teacher data when the third mapping data is learned.

### Regarding Input Data Transmission Process

In the processes of FIGS. 4A, 4B, 9A, and 9B, the time-series data of the minute rotation times T30 for three combustion cycles has been transmitted, but the embodiments according to the invention are not limited to thereto. For example, time-series data for two combustion cycles of the minute rotation times T30(25) to T30(48) when the determination result using the practical mapping data 76a is not consistent with the determination result using the evaluation mapping data 76b and the minute rotation times T30(49) to T30(72) at the time of transition from the state where determination is made that the determination results are not consistent with each other to the state where determination is made that the determination results are consistent with each other may be used.

In the processes of FIGS. 4A, 4B, 9A, and 9B, in addition to the minute rotation times T30(25) to T30(48) when the determination result using the practical mapping data 76a is not consistent with the determination result using the evaluation mapping data 76b, the minute rotation times T30(49) to T30(72) at the time of transition from the state where determination is made that the determination results are not consistent with each other to the state where determination is made that the determination results are consistent with each other have been transmitted. However, the embodiments according to the invention are not limited to thereto. For example, the time-series data of the minute rotation time T30 in a state where determination is made that the determination results are consistent with each other and the time-series data of the minute rotation time T30 at the time of transition from the state where determination is made that the determination results are consistent with each other to the state where determination is made that the determination results are not consistent with each other may be transmitted.

The time-series data of the minute rotation time T30 at the time of transition to the state where determination is made that the determination results are consistent with each other among the time-series data to be transmitted is not limited to the time-series data for one combustion cycle. For example, as described in the "Regarding Second Mapping Data" section, in the case where the output value by one input outputs just the value of the misfire variable of one cylinder, and the input data itself is the time-series data of the minute rotation time T30 in a period shorter than one combustion cycle, time-series data of an amount corresponding to the period may be used. However, it is not indispensable that the time-series data of the minute rotation time T30 constituting the input variable of the mapping and the time-series data of the minute rotation time T30 at the time of transition to the state where determination is made that the determination results are consistent with each other are the minute rotation times T30 in the sections having the same length.

In the processes of FIGS. 4A, 4B, 9A, and 9B, once in one trip, the time-series data of the minute rotation times T30 for three combustion cycles corresponding to the case where the number of consecutive determinations that the determination results are not consistent with each other is the maximum has been transmitted. However, the embodiments according to the invention are not limited to thereto. For example, once in one trip, all of the minute rotation times T30 in the period in which the consecutive determinations are made that the determination results are not consistent with each other, which corresponds to the case where the number of consecutive determinations that the determination results are not consistent with each other is the maximum, and the time-series data of the minute rotation time T30 for one combustion cycle at the time of transition from the state where determination is made that the determination results are not consistent with each other to the state where determination is made that the determination results are consistent with each other may be transmitted. For example, once in one trip, all of the minute rotation times T30 in the period in which determination is made that the determination results are not consistent with each other and the time-series data of the minute rotation time T30 for one combustion cycle at the time of transition from the state where determination is made that the determination results are not consistent with each other to the state where determination is made that the determination results are consistent with each other for each of the periods may be transmitted.

The data related to the output value of the mapping defined by the evaluation mapping data 76b, which will be transmitted in the processes of FIGS. 4A, 4B, 9A, and 9B, is not limited to the output value of the mapping itself. For example, the output value of the mapping defined by the practical mapping data 76a may be used. In this case, for example, in the processes of S92 to S94, when the skilled person determines that the output value of the mapping defined by the practical mapping data 76a is correct, an affirmative determination may be made in the process of S96. However, even though such data is not transmitted, the data analysis center 100 can calculate the output value of the mapping defined by the evaluation mapping data 76b by transmitting the input data.

The data related to the input data of the mapping defined by the evaluation mapping data 76b, which will be transmitted, is not limited to the input data itself. For example, even when the input data of the mapping defined by the evaluation mapping data 76b is the minute rotation times T30[0] and T30[6] used in the process of S16, the data to be transmitted may be the minute rotation times T30(1) to T30(24). Thereby, for example, the visual information of the waveform data can be provided to the skilled person by the process of S92.

Among the data to be transmitted, the data other than the input data of the mapping and the minute rotation time T30 is not limited to that exemplified in the extra information set GrE. It is not indispensable that the data other than the input data of the mapping and the minute rotation time T30 is to be transmitted.

### Regarding Coping Process

In the above embodiments, the process of operating the warning light 90 mounted on the vehicle has been exemplified as the alarm process, but the embodiments according to the invention are not limited thereto. For example, a process of operating the communicator 77 to display information indicating that an abnormality has occurred on a portable terminal of a user may be employed.

The coping process is not limited to the alarm process. For example, the process may be performed such that an operation unit for controlling the combustion of the air-fuel mixture in the combustion chamber 18 of the internal combustion engine 10 is operated in accordance with information indicating that a misfire has occurred. For example, as described in the "Regarding Default State of Vehicle" section above, in the case of the mapping that outputs the value of the imbalance variable, the fuel injection valve may be operated to suppress the imbalance abnormality. For example, as described in the "Regarding Default State of Vehicle" section above, in the case of the mapping that outputs the PM amount, the PM may be combustion-removed by operating the operation unit of the internal combustion engine 10 to raise the temperature of the filter. For example, as described in the "Regarding Default State of Vehicle" section above, in the case of the mapping that outputs the temperature of the catalyst, the operation unit of the internal combustion engine may be operated to raise the temperature of the catalyst. The operation process in this case may be, for example, a catalyst regeneration process.

### Regarding Vehicle Learning Control System

For example, in addition to the control device 70 and the data analysis center 100, the vehicle learning control system may be configured by a portable terminal. The system can be realized, for example, by executing the process of FIG. 3 by the portable terminal and transmitting the result to the control device 70, in the first embodiment.

### Regarding Vehicle Learning Device

The vehicle learning device may be configured using a portable terminal instead of the data analysis center 100. The device can be realized, for example, by storing the high-specification mapping data 106b and the like in the storage device of the portable terminal, and executing the process of FIG. 9B by the portable terminal. In such a case, just data related to the vehicle VC1 may be transmitted to the portable terminal of the user of the vehicle VC1.

### Regarding Execution Device

The execution device is not limited to a device that includes the CPU 72 (102) and the ROM 74 (104) and that executes software processing. For example, a dedicated hardware circuit (for example, an ASIC) that performs hardware processing on at least some of the software-processed data in the above embodiments may be provided. That is, the execution device may have any one of the following configurations (a) to (c).
(a) A processor that executes all of the above processing in accordance with a program, and a program storage device such as a ROM that stores the program are provided.
(b) A processor and a program storage device that execute a part of the above processing in accordance with a program, and a dedicated hardware circuit that executes the remaining processing are provided.
(c) A dedicated hardware circuit that executes all of the above processing is provided. Here, there may be a plurality of software execution devices provided with the processor and the program storage device, and a plurality of dedicated hardware circuits.

### Regarding Storage Device

In the above embodiments, the storage device 76 that stores the evaluation mapping data 76b and the practical mapping data 76a and the ROM 74 which is a storage device that stores the relearning subprogram 74b are used as separate storage devices. However, the embodiments according to the invention are not limited thereto. For example, the storage device 106 that stores the high-specification mapping data 106b, the evaluation mapping data 76b, and the mirror mapping data 106d, and the ROM 104 that stores the relearning main program 104a are used as separate storage devices. However, the embodiments according to the invention are not limited thereto.

### Regarding Internal Combustion Engine

In the above embodiments, the in-cylinder injection valve that injects fuel into the combustion chamber 18 is exemplified as the fuel injection valve, but the embodiments are not limited thereto. For example, a port injection valve that injects fuel into the intake passage 12 may be used. For example, both a port injection valve and an in-cylinder injection valve may be provided.

The internal combustion engine is not limited to a spark ignition type internal combustion engine, and may be, for example, a compression ignition type internal combustion engine using light oil or the like as fuel. It is not indispensable that the internal combustion engine constitutes the drive system. For example, the internal combustion engine may be mounted on a so-called series hybrid vehicle in which the crankshaft is mechanically connected to an on-vehicle generator and the power transmission from the drive wheel 60 is cut off.

### Regarding Vehicle

The vehicle is not limited to a vehicle in which the device that generates the propulsive force of the vehicle is solely an internal combustion engine. For example, in addition to the series hybrid vehicle described in the "Regarding Internal Combustion Engine" section, a parallel hybrid vehicle or a series-parallel hybrid vehicle may be used. Further, an electric vehicle without an internal combustion engine may be used.

### Others

The drive system device interposed between the crankshaft and the drive wheels is not limited to a stepped transmission, and may be, for example, a continuously variable transmission.

## Claims

1. A vehicle control device comprising:
an execution device (72, 74) and a storage device (76), wherein:
the storage device (76) is configured to store first mapping data (76a) defining a first mapping that outputs a first output value related to a default state of a vehicle by inputting first input data based on a detection value of an in-vehicle sensor (80, 82), and second mapping data (76b) defining a second mapping that outputs a second output value related to the default state by inputting second input data based on the detection value of the in-vehicle sensor (80, 82) and including data learned by machine learning; and
the execution device (72, 74) is configured to execute a first acquisition process (S10; S40) of acquiring the first input data, a first calculation process (S16, S18; S42 to S46) of calculating the first output value by inputting the first input data to the first mapping, a coping process (S30) of operating predetermined hardware (90) to cope with a calculation result of the first calculation process based on the calculation result, a second acquisition process (S40; S40a) of acquiring the second input data, a second calculation process (S42, S44; S42a, S44a) of calculating the second output value by inputting the second input data to the second mapping, and a determination process (S64, S70) of determining whether or not the first output value and the second output value are consistent with each other.

2. The vehicle control device according to claim 1, wherein the execution device (72, 74) is configured to, when determination is made in the determination process that there is no consistency, execute a relearning data generation process (S76; S98a) of generating data for updating the second mapping data based on the second input data used when the determination is made that there is no consistency.

3. The vehicle control device according to claim 2, wherein the execution device (72, 74) is configured to execute a relearning process (S102) of relearning the second mapping data based on the data generated by the relearning data generation process.

4. A vehicle learning control system comprising:
the execution device (72, 102, 74, 104) and the storage device (76, 106) according to claim 3,
wherein the relearning data generation process includes a display process (S92) of displaying information regarding the second input data on a display device, a validity determination result import process (S94) of importing information on whether or not an output value of the second mapping has an error, and a process (S98) of generating data for updating the second mapping data based on the information imported by the validity determination result import process.

5. A vehicle learning control system comprising:
the execution device (72, 102, 74, 104) and the storage device (76, 106) according to claim 3, wherein:
the storage device (76, 106) is configured to store third mapping data (106b) defining a third mapping that outputs a third output value related to the default state by inputting data based on the detection value of the in-vehicle sensor (80, 82); and
the relearning data generation process includes a third calculation process of calculating the third output value by inputting the data based on the detection value of the in-vehicle sensor (80, 82) to the third mapping, and a process of generating data for updating the second mapping data based on a presence or absence of a consistency between the third output value and the second output value.

6. A vehicle control device comprising a first execution device, wherein:
the execution device (72, 102, 74, 104) according to claim 4 or 5 includes the first execution device (72, 74) mounted on the vehicle and a second execution device (102, 104) separate from an in-vehicle device;
the relearning data generation process includes an input data transmission process of transmitting data related to the second input data used when the determination is made that there is no consistency, and an input data reception process of receiving the data transmitted by the input data transmission process;
the first execution device (72, 74) is configured to execute the first acquisition process, the first calculation process, the second acquisition process, the second calculation process, the coping process, the determination process, and the input data transmission process; and
the second execution device (102, 104) is configured to execute the processes other than the input data transmission process in the relearning data generation process, and the relearning process.

7. The vehicle control device according to claim 6, wherein:
the second execution device (102, 104) is configured to execute a parameter transmission process (S104; S104a) of transmitting a relearned parameter learned by the relearning process to the vehicle; and
the first execution device (72, 74) is configured to execute a parameter reception process (S84; S84a) of receiving the parameter transmitted by the parameter transmission process.

8. The vehicle control device according to claim 6 or 7, wherein the first execution device (72, 74) is configured to execute the input data transmission process (S80) when travel of the vehicle ends.

9. A vehicle learning device comprising the second execution device (102, 104) according to any one of claims 6 to 8.

10. A vehicle learning device comprising:
a second execution device (102, 104) and a second storage device (106), wherein:
the execution device (72, 102, 74, 104) according to claim 4 or 5 includes a first execution device (72, 74) mounted on the vehicle and the second execution device (102, 104) separate from an in-vehicle device;
the storage device (76, 106) includes a first storage device (76) mounted on the vehicle and the second storage device (106) separate from an in-vehicle device;
the first mapping data includes practical mapping data (76a) and comparison mapping data (106d);
the first storage device (76) is configured to store the practical mapping data;
the second storage device (106) is configured to store the comparison mapping data and the second mapping data;
the first acquisition process includes a practical acquisition process (S40b) of acquiring data to be input to a mapping defined by the practical mapping data, and a comparison acquisition process (S40b) of acquiring data to be input to a mapping defined by the comparison mapping data;
the first execution device (72, 74) is configured to execute the first acquisition process, the second acquisition process, the first calculation process based on the practical mapping data, an input data transmission process (S76a) of transmitting the data acquired by the comparison acquisition process and the second input data acquired by the second acquisition process to an outside of the vehicle, and the coping process; and
the second execution device (102, 104) is configured to execute an input data reception process (S90a) of receiving the data transmitted by the input data transmission process, the first calculation process based on the comparison mapping data, the second calculation process, the determination process, the relearning data generation process, and the relearning process.

11. A vehicle control device comprising:
a first execution device (72, 74) and a first storage device (76), wherein:
the execution device (72, 102, 74, 104) according to claim 4 or 5 includes the first execution device (72, 74) mounted on the vehicle and a second execution device (102, 104) separate from an in-vehicle device;
the storage device (76, 106) includes the first storage device (76) mounted on the vehicle and configured to store the first mapping data, and a second storage device (106) separate from an in-vehicle device and configured to store the second mapping data;
the first execution device (72, 74) is configured to execute the first acquisition process, the second acquisition process, an input data transmission process of transmitting the second input data acquired by the second acquisition process to an outside of the vehicle, the first calculation process, a first calculation result transmission process (S76b) of transmitting a calculation result of the first calculation process, and the coping process; and
the second execution device (102, 104) is configured to execute an input data reception process of receiving the second input data transmitted by the input data transmission process, a first calculation result reception process (S90b) of receiving the calculation result transmitted by the first calculation result transmission process (S76b), the second calculation process, the determination process, the relearning data generation process, and the relearning process.

12. A vehicle control device comprising:
a first execution device (72, 74) and a first storage device (76), wherein:
the execution device (72, 102, 74, 104) according to claim 4 or 5 includes the first execution device (72, 74) mounted on the vehicle and a second execution device (102, 104) separate from an in-vehicle device;
the storage device (76, 106) includes the first storage device (76) mounted on the vehicle and configured to store the first mapping data and a second storage device (106) separate from an in-vehicle device and configured to store the second mapping data;
the first execution device (72, 74) is configured to execute the first acquisition process, the second acquisition process, an input data transmission process of transmitting the second input data acquired by the second acquisition process to an outside of the vehicle, the first calculation process, a second calculation result reception process (S130) of receiving a calculation result of the second calculation process, the coping process, the determination process, and a result transmission process of transmitting data related to a determination result by the determination process; and
the second execution device (102, 104) is configured to execute an input data reception process of receiving the data transmitted by the input data transmission process, the second calculation process, a second calculation result transmission process (S142) of transmitting the calculation result of the second calculation process, a result reception process of receiving the data transmitted by the result transmission process, the relearning data generation process, and the relearning process.

13. A vehicle learning device comprising the second execution device (102, 104) and the storage device (76, 106) according to claim 11 or 12.

14. A vehicle control device comprising a first execution device (72, 74), wherein:
the execution device (72, 102, 74, 104) according to claim 4 or 5 includes the first execution device (72, 74) mounted on the vehicle and a second execution device (102, 104) separate from an in-vehicle device;
the first execution device (72, 74) is configured to execute the first acquisition process, the second acquisition process, an input data transmission process of transmitting the first input data acquired by the first acquisition process and the second input data acquired by the second acquisition process to an outside of the vehicle, a result reception process of receiving a calculation result of the first calculation process, and the coping process; and
the second execution device (102, 104) is configured to execute an input data reception process of receiving the data transmitted by the input data transmission process, the first calculation process, a first calculation result transmission process of transmitting the calculation result of the first calculation process, the second calculation process, the determination process, the relearning data generation process, and the relearning process.

15. A vehicle learning device comprising the second execution device (102, 104) and the storage device (76, 106) according to claim 14.
